# EUROPEAN PATENT SPECIFICATION

(11) **EP 4 102 295 B1**
(45) Date of publication and mention of the grant of the patent: **09.12.2026**
(21) Application number: 21751148.4
(22) Date of filing: 05.02.2021
(51) Int. Cl.: G03B 17/12, G02B 3/12, G02B 27/64, G02B 7/08

(54) **CAMERA DEVICE**
KAMERAVORRICHTUNG
DISPOSITIF DE CAMÉRA

(30) Priority: 06.02.2020 KR 20200014404; 16.06.2020 KR 20200073120
(43) Date of publication of application: 14.12.2022
(73) Proprietor: LG Innotek Co., Ltd., Seoul 07796 (KR)
(72) Inventor: KIM, Jung Cheol, Seoul 07796 (KR); PARK, Tae Bong, Seoul 07796 (KR); JANG, Hyeon Jun, Seoul 07796 (KR)
(74) Representative: DREISS Patentanwälte PartG mbB
(86) International application number: PCT/KR2021/001591
(87) International publication number: WO 2021/158082

(56) References cited:
- EP-A1- 3 495 867
- WO-A1-2018/234573
- JP-A- 2017 003 956
- KR-A- 20180 123 376
- KR-A- 20180 137 277
- KR-A- 20190 101 904
- KR-A- 20190 139 574
- US-A1- 2019 227 253

## Description

### [Technical Field]

The present embodiment relates to a camera device.

### [Background Art]

KR 2019 0139574 A discloses camera module. This camera module is a prism unit for converting incident light into parallel light in the optical axis direction, while transmitting the parallel light, by changing the angle of the plane through which the parallel light is transmitted to change the optical path of the parallel light. A tilting unit, a lens unit for condensing parallel light has the light path changed. An image sensor unit converts the parallel light condensed by the lens unit into an electrical signal. The tilting unit is disposed between the prism unit and the lens unit.

WO 2018/234573 A1 discloses a camera comprising autofocus and optical image stabilization with coils. Upper and lower magnets comprise a magnetization that is aligned with the coil axis of an associated second coil. The magnetizations of the respective upper and lower magnet are anti-parallel. In a plane comprising the axial direction / optical axis the magnetization of the upper magnets points towards a lens barrel and the magnetizations of the lower magnets points away from the lens barrel. The magnetization of the upper and lower magnets is perpendicular to the optical axis / axial direction.

EP 3 495 867 A1 relates to a tunable prism for optical image stabilization. It comprises a transparent window arranged on membrane, which comprises a deformable portion extending around an outer edge of the window, such that the window can be tilted around a first and/or a second axis with respect to the bottom portion.

Since it is difficult to apply a voice coil motor (VCM) technology used in an existing general camera module to a camera module for ultra-small size and low power consumption, research related thereto has been actively conducted.

In the case of a camera module being mounted on a small electronic product such as a smartphone, the camera module may frequently receive impacts during use, and the camera module may be slightly shaken depending on the user's hand-shake while photographing. In consideration of this point, recently, a technique for additionally installing a hand-shake prevention means to a camera module has been developed.

Meanwhile, 3D contents are being applied in many fields, such as education, manufacturing, and autonomous driving, as well as games and culture. In order to acquire 3D contents, depth map is required. Depth information is information indicating a distance in space, and indicates perspective information of another point with respect to one point of a 2D image.

As a method of acquiring depth information, a time of flight (ToF) method has been attracting attention recently. According to the TOF method, the distance to the object is calculated by measuring the flight time, that is, the time the light is emitted and reflected. The biggest advantage of the ToF method is that it provides distance information in 3D space quickly in real time. In addition, the user can obtain accurate distance information without applying a separate algorithm or hardware correction. In addition, accurate depth information can be obtained by measuring a very close subject or even measuring a moving subject.

However, in the case of the current ToF method, there is a problem in that information that can be obtained per frame, that is, the resolution is low.

In order to increase the resolution, the number of pixels of the sensor may be increased, but in this case, there is a problem in that the volume and manufacturing cost of the camera device are greatly increased.

### [Detailed Description of the Invention]

### [Technical Subject]

A first embodiment of the present invention provides a lens module capable of increasing the size of a convex lens of a first lens part and capable of finely adjusting the focal length, and a camera module and optical device comprising the same.

The technical problem to be solved in the first embodiment of the present invention is not limited to the technical problem mentioned above, and another technical problem not mentioned will be clearly understood by those of ordinary skill in the art to which the present invention belongs from the following description.

A second embodiment of the present invention is intended to provide a camera device capable of increasing resolution by being used in the ToF method.

In more detail, it is intended to provide a camera device that can be used in a super resolution (SR) technique.

### [Technical Solution]

A camera device according to the invention is as defined in claim 1.

The pressing portion may be disposed between an upper surface of the bobbin and the liquid lens.

The pressing portion may be spaced apart from the lens barrel.

The distance between the pressing portion and an inner surface of the housing in a horizontal direction perpendicular to the optical axis may be smaller than the distance between an outer side surface of the lens barrel and an inner side surface of the housing in the horizontal direction.

The liquid lens may comprise a receptor, a liquid being accommodated in the receptor, and a membrane for sealing the fluid within the receptor, and the pressing portion may be configured to contact the membrane.

The distance between the optical axis and the pressing portion in a direction perpendicular to the optical axis may be larger than the distance between the optical axis and the outer side surface of the lens barrel in a direction perpendicular to the optical axis.

The pressing portion may be disposed outside the lens barrel.

The lens module comprises an upper elastic member coupled to the bobbin and the housing, a coupling portion coupled to the upper elastic member is formed on an upper surface of the bobbin, an upper surface of the pressing portion may be located closer to the liquid lens than an upper surface of the coupling portion.

The lens module may comprise an upper plate and a side plate being extended from the upper plate, a cover member for accommodating the housing is comprised, and the receptor may be coupled to an inner surface of the upper plate of the cover member.

Or the lens module may comprise: a cover member comprising an upper plate and a side plate being extended from the upper plate to accommodate the housing; and a holder being disposed between the cover member and the housing and accommodating the receptor.

The pressing portion may be a protruded portion formed integrally with the bobbin and being protruding from an upper surface of the bobbin.

The pressing portion may be a pressing frame formed separately from the bobbin, an upper surface of the pressing frame is in contact with the liquid lens, and a lower surface of the pressing frame may be in contact with an upper surface of the bobbin.

The pressing portion may be disposed in the lens barrel.

The magnet comprises: a first magnet disposed on the lens forming member and facing the first coil; a second magnet disposed on the lens forming member and facing the second coil; a third magnet disposed on the lens forming member and facing the third coil; and a fourth magnet disposed on the lens forming member and facing the fourth coil, wherein the first and second magnets are disposed on one side of the lens forming member, and wherein the third and fourth magnets may be disposed on the other side of the lens forming member.

The outer side surface of the first magnet and the outer side surface of the second magnet may face the same direction, and the outer side surface of the third magnet and the outer side surface of the fourth magnet may face the same direction.

The outer side surface of the first magnet and the outer side surface of the second magnet are disposed on the same plane, and the outer side surface of the third magnet and the outer side surface of the fourth magnet may be disposed on the same plane.

The holder comprises a first hole formed in the first side plate and a second hole formed in the second side plate, wherein the first coil and the second coil are disposed in the first hole of the holder, and wherein the third coil and the fourth coil may be disposed in the second hole of the holder.

The upper portion of the first magnet has an N-pole polarity, the lower portion of the first magnet has an S-pole polarity, the upper portion of the second magnet has an S-pole polarity, and the lower portion of the second magnet may have an N-pole polarity.

The lens forming member comprises a yoke, and the magnet may be disposed on the yoke and disposed between the yoke and the coil.

The lens forming member comprises a window for pressing the membrane and a frame coupled to the window, wherein the magnet may be disposed on the frame.

The frame comprises a body portion comprising a hole and coupled to the window and a leg portion being extended outwardly from the body portion, wherein the leg portion may comprise a first leg portion and a second leg portion being extended from one side surface of the body portion in a first direction and being spaced apart from each other, and a third leg portion and a fourth leg portion being extended from the other side surface of the body portion in a second direction opposite to the first direction and being spaced apart from each other.

Each of the first to fourth leg portions may comprise a hole being formed at a position corresponding to a portion of the magnet.

The holder may comprise a protrusion being protruded from an outer surface of the side plate of the holder, and the substrate may comprise a hole into which the protrusion of the holder is inserted.

The camera device comprises: a printed circuit board; a sensor disposed on the printed circuit board; a base disposed on the printed circuit board; a lens coupled to the base; and a filter disposed on the base and disposed between the lens and the sensor, wherein the liquid lens may be disposed at a position corresponding to the lens.

The base may be directly coupled to an upper surface of the printed circuit board, and the base may be integrally formed so that a space between the sensor and the filter may be sealed by the base.

The board comprises a terminal disposed at a lower end portion, and the terminal of the board may be coupled to the printed circuit board.

An optical device according to a second embodiment of the present invention comprises a light emitting module; and a camera device, wherein the camera device may receive the light irradiated from the light emitting module.

The first to fourth directions may be diagonal directions of the pixel.

### [Advantageous Effects]

In a first embodiment of the present invention, since the pressing frame is located outside the lens barrel, the size of the convex lens of the first lens part in a direction perpendicular to the optical axis can be increased.

In addition, in a first embodiment of the present invention, since the focal length of the second lens part is adjusted by the lens driving device, and at the same time, the focal length of the first lens part is adjusted by pressing the protruded portion of the bobbin, the focal length of the lens module can be finely adjusted.

In addition, the effects obtainable in a first embodiment of the present invention are not limited to the above mentioned effects, and other effects not mentioned can be understood clearly to those of ordinary skill in the art from the description below.

Through a second embodiment of the present invention, depth information can be acquired with high resolution even without significantly increasing the number of pixels of the sensor.

In addition, a high-resolution image can be obtained from a plurality of low-resolution images obtained by the camera device according to a second embodiment of the present invention through the SR technique.

### [Brief Description of Drawings]

FIG. 1 is a schematic perspective view of a lens module according to a first example not forming part of the present invention.
FIG. 2a is an exploded perspective view of the lens module in FIG. 1.
FIG. 2b is an exploded perspective view of the lens driving device in FIG. 2a.
FIG. 3a is a cross-sectional view of a first lens part according to a first example not forming part of the present invention.
FIG. 3b is a cross-sectional view of a first lens part according to another exemplary embodiment.
FIG. 4a is a perspective view of a bobbin.
FIG. 4b is a perspective view of a bobbin and a coil.
FIG. 5a is a perspective view of a housing.
FIG. 5b is a perspective view of a housing and a magnet.
FIG. 6 is a perspective view of a circuit board and a position sensor.
FIG. 7 shows a base, a lower elastic member, a circuit board, and a position sensor.
FIG. 8a is a cross-sectional view of a lens module in the AB direction in FIG. 2a.
FIG. 8b is a cross-sectional view of a lens module in the CD direction in FIG. 2a.
FIG. 9 is a perspective view of a lens barrel and a lens.
FIG. 10 is a cross-sectional view of a first lens part, a second lens part, and a bobbin.
FIG. 11 shows a modified embodiment of the bobbin in FIG. 4a.
FIG. 12 is a cross-sectional view of a lens module according to a modified embodiment in FIG. 11.
FIG. 13 is an exploded perspective view of a lens module according to another embodiment.
FIG. 14 is a perspective view in which a lens driving device and a second lens part are coupled in FIG. 13.
FIG. 15 is a perspective view of a second lens part in FIG. 13.
FIG. 16 is a cross-sectional view of a lens module in the AB direction in FIG. 14.
FIG. 17 is an exploded perspective view of a lens module according to another embodiment.
FIG. 18 is a perspective view of a second lens part in FIG. 17.
FIG. 19 is a cross-sectional view of a lens module in a direction AB in FIG. 17.
FIG. 20 is an exploded perspective view of a lens module according to another embodiment.
FIG. 21 is a cross-sectional view of a lens module in a direction AB in FIG. 20.
FIG. 22 is an exploded perspective view of a lens module according to another embodiment.
FIG. 23 is a combined perspective view of a lens module in FIG. 22 in which the cover member is omitted.
FIG. 24 is a cross-sectional view of a lens module in the CD direction in FIG. 23.
FIG. 25 is an exploded perspective view of a holder and a first lens part.
FIG. 26 shows a pressing area of a first lens part pressed by a pressing portion according to a first example not forming part of the present invention.
FIG. 27a is a conceptual diagram of a camera module according to a first example not forming part of the present invention.
FIG. 27b is an exploded perspective view of a camera module according to another embodiment.
FIG. 28 is a perspective view of a portable terminal according to a first example not forming part of the present invention.
FIG. 29 is a block diagram of the portable terminal illustrated in FIG. 28.
FIG. 30 is a perspective view of a camera device according to a first embodiment of the present invention.
FIG. 31 is a cross-sectional view taken along line A-A in FIG. 30.
FIG. 32 is a cross-sectional view taken along line B-B in FIG. 30.
FIG. 33 is an exploded perspective view of a camera device according to a first embodiment of the present invention.
FIG. 34 is an exploded perspective view of a camera device according to a first embodiment of the present invention, as viewed from a different direction from FIG. 33.
FIG. 35 is a perspective view of a partial configuration of a camera device according to a first embodiment of the present invention.
FIG. 36 is a perspective view of a part of a camera device in FIG. 35 viewed from another direction.
FIG. 37 is a perspective view illustrating a liquid lens and a driving unit according to a first embodiment of the present invention.
FIG. 38 is a perspective view of a camera module according to a first embodiment of the present invention.
FIG. 39 is a conceptual diagram for explaining the concept of driving a liquid lens according to a first embodiment of the present invention.
FIG. 40 is a view for explaining a method of driving a liquid lens according to a first embodiment of the present invention.
FIG. 41 is a conceptual diagram conceptually sequentially illustrating a plurality of images acquired for a super resolution (SR) technique in a camera device according to a first embodiment of the present invention.
FIG. 42 is a diagram sequentially illustrating images of first to fourth frames acquired for the SR technique in a camera device according to a first embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction based on one component may be comprised.

For convenience of description, the lens driving device according to the embodiment is described using a Cartesian coordinate system (x, y, z), but may be described using other coordinate systems, and the embodiment is not limited thereto. In each drawing, the x-axis and the y-axis refer to directions perpendicular to the z-axis, which is the optical axis direction; the z-axis direction, which is the optical axis **OA** direction, is referred to as a 'first direction'; the x-axis direction is referred to as a 'second direction'; and the y-axis direction may be referred to as a 'third direction'.

The lens module according to the embodiment may perform an 'auto-focusing function'. Here, the auto-focusing function refers to automatically forming the image of the subject on a surface of the image sensor.

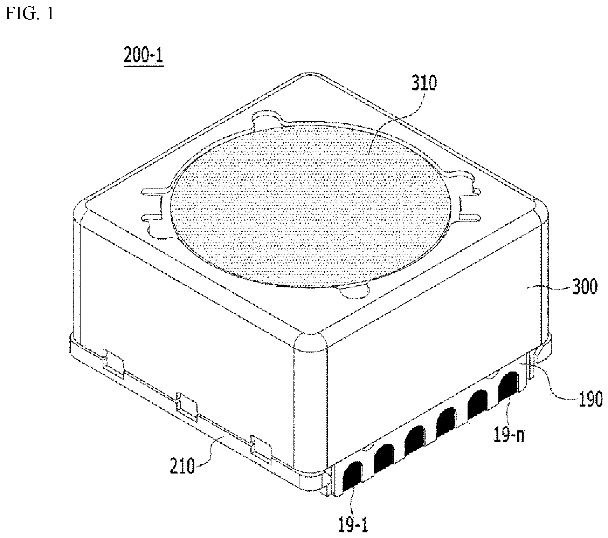

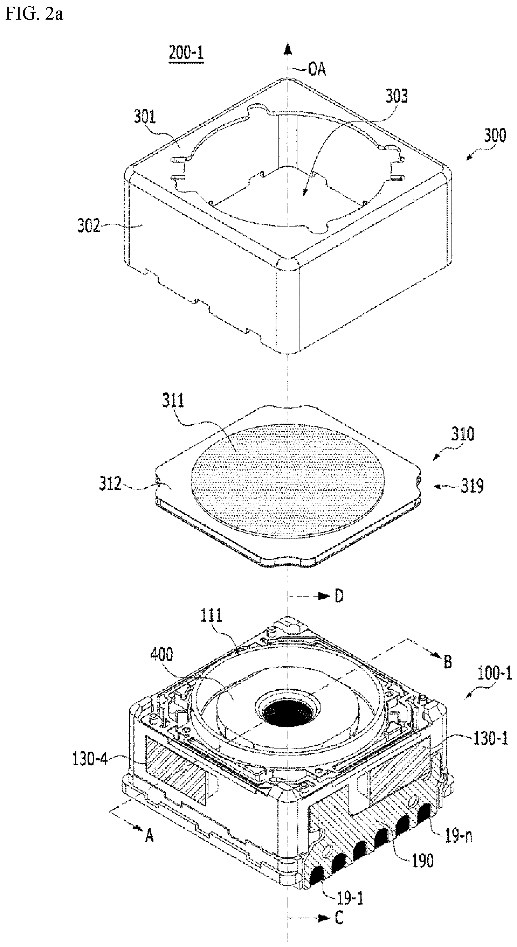

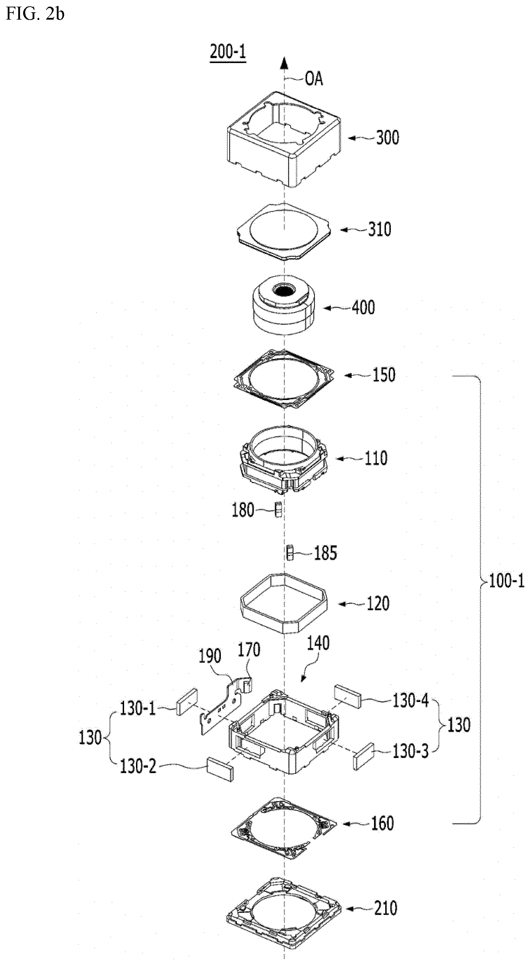

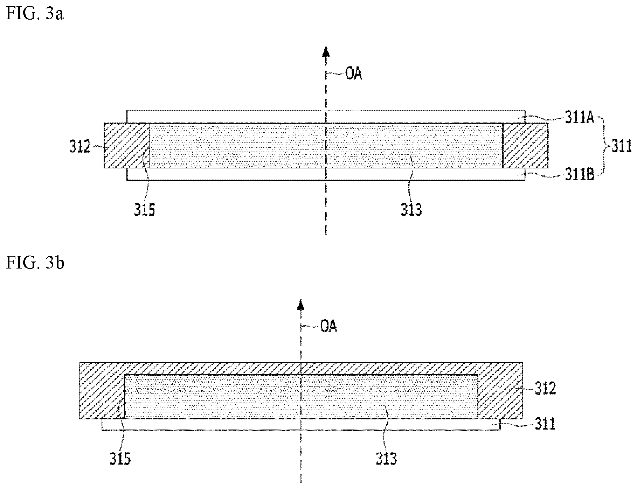

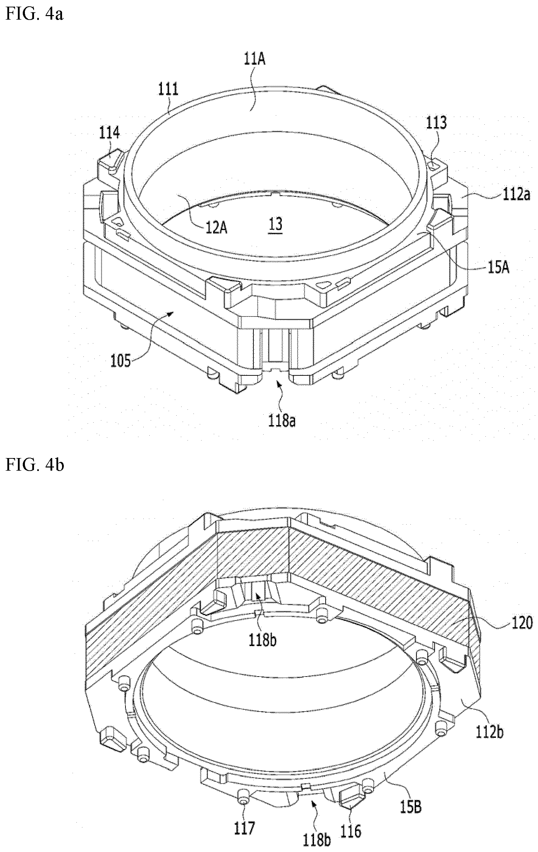

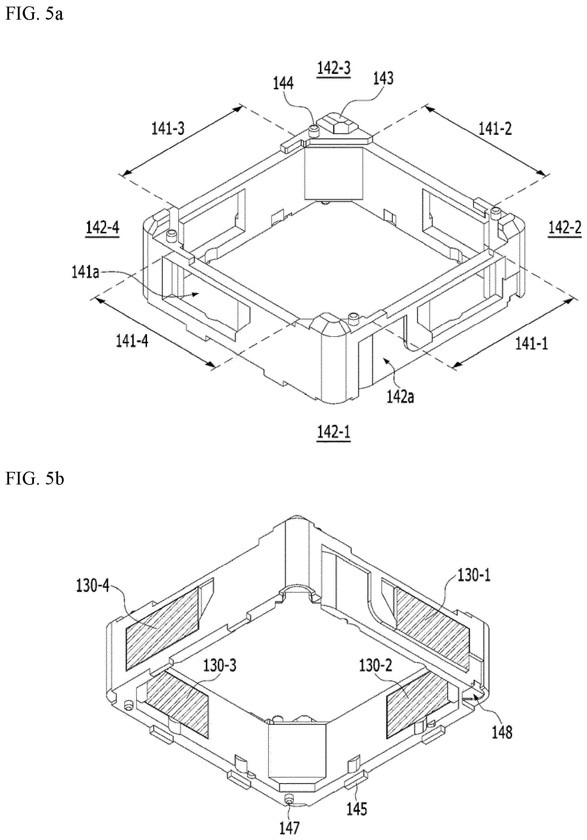

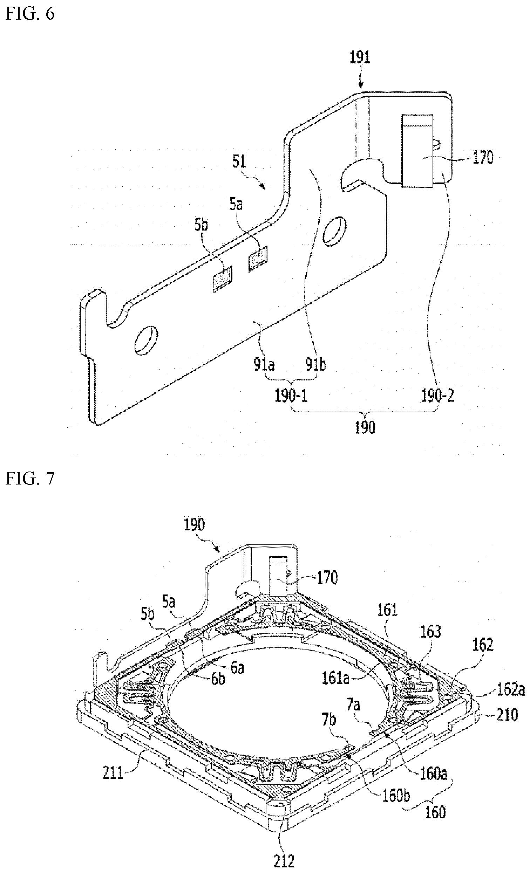

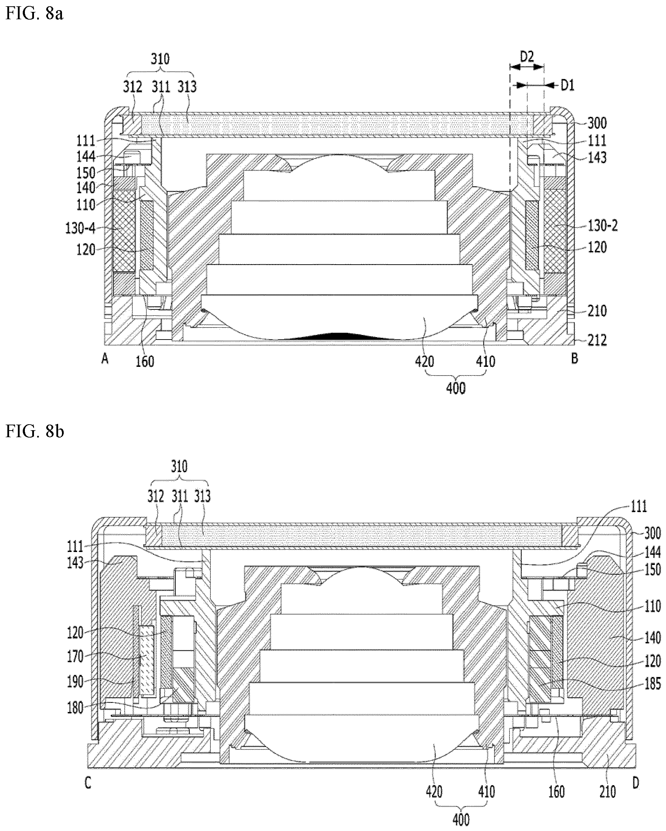

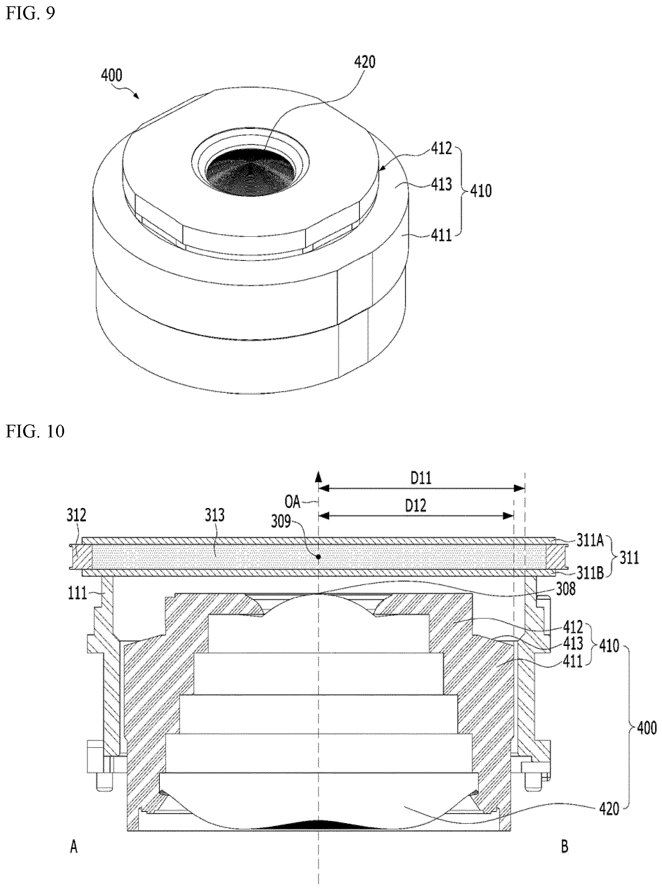

FIG. 1 is a schematic perspective view of a lens module **200-1** according to a first example not forming part of the present invention; FIG. 2a is an exploded perspective view of a lens module **200-1** in FIG. 1; FIG. 2b is an exploded perspective view of a lens driving device **100-1** in FIG. 2a; FIG. 3a is a cross-sectional view of a first lens part **310** according to a first embodiment of the present invention; FIG. 3b is a cross-sectional view of a first lens part **310** according to another embodiment; FIG. 4a is a perspective view of a bobbin; FIG. 4b is a perspective view of a bobbin and a coil; FIG. 5a is a perspective view of a housing; FIG. 5b is a perspective view of a housing and a magnet; FIG. 6 is a perspective view of the circuit board **190** and the position sensor **170;** FIG. 7 shows a base **210,** a lower elastic member **160,** the circuit board **190,** and the position sensor **170;** FIG. 8a is a cross-sectional view of the lens module **200-1** in the AB direction in FIG. 2a; FIG. 8b is a cross-sectional view of the lens module **200-1** in the CD direction in FIG. 2a; FIG. 9 is a perspective view of the lens barrel **400** and the lens **420;** and FIG. 10 is a cross-sectional view of the first lens part **310,** the second lens part **400,** and the bobbin **110.**

Referring to FIGS. 1 to 10, the lens module **200-1** may comprise a first lens part **310,** a second lens part **400,** and a lens driving device **100-1.**

Hereinafter, the lens module may be expressed by replacing it with a "camera module", and "lens driving device" may be called alternatively as a lens driver, a voice coil motor (VCM), an actuator, or a lens moving device, and the like.

Hereinafter, the term "coil" may be expressed by replacing it with a coil unit or a coil body, and the term "elastic member" may be expressed by replacing it with an elastic unit or a spring.

In addition, in the following description, the term "terminal" may be expressed by replacing it with a pad, an electrode, a conductive layer, or a bonding part.

The lens module **200-1** may perform an auto-focusing function by a lens driving device coupled to the first lens part **310** and the second lens part **400.**

For example, the first lens part **310** may comprise a liquid lens. For example, the curvature of the liquid lens of the first lens part **310** may be changed by the pressing portion, and thus the focal length of the lens module **200-1** may be adjusted.

For example, the first lens part **310** may be a liquid lens or a variable focus lens.

For example, the first lens part **310** may comprise a liquid **313,** a receptor **312,** and a membrane **311.** For example, liquid may be a fluid.

The liquid **313** may be transparent, non-volatile, and chemically stable. In addition, the liquid **313** may have a low viscosity and thus have excellent mobility.

The liquid **313** may be a material capable of transmitting light.

For example, the liquid **313** may be silicone oil or liquid silicone. In addition, the liquid **313** may comprise, but is not limited to, transparent hydrocarbon-based oil, ester oil, ether-based oil, perfluoropolyether oil, and the like.

The receptor **312** serves to accommodate the liquid **313.** The receptor **312** may be expressed by replacing it with a "container", an "accommodating part", or a "support part".

When viewed from above, the shape of the receptor **312** may be a polygonal (e.g., quadrangular) shape, but is not limited thereto, and may have a circular or elliptical shape in another embodiment.

For example, a groove part **319** may be provided at a corner of the receptor 312. The groove part **319** may be a shape being recessed from the side surface of the corner of the receptor **312.**

For example, liquid **313** may be disposed or accommodated inside the receptor **312.** For example, the receptor **312** may comprise an accommodating part **315** for accommodating the liquid **313.** For example, the accommodating part **315** may be a cavity, a recess, a hole, or a hollow.

The receptor **312** may be supported by the cover member **300.** For example, the receptor **312** may be coupled with the cover member **300.**

For example, the upper surface of the receptor **312** may be coupled or fixed to the inner surface of the upper plate of the cover member **300.** For example, the upper surface of the receptor **312** may be coupled or fixed to the inner surface of the upper plate **301** of the cover member **300** by an adhesive. Or, the receptor **312** may comprise a first coupling portion, and the cover member **300** may comprise a second coupling portion being coupled to the first coupling portion of the receptor **312.**

In another embodiment, at least a portion of the upper surface of the receptor **212** and/or the membrane **311** may be coupled, attached, or fixed to the inner surface of the upper plate **301** of the cover member **300.**

Since the receptor **312** is located on a path through which light passes, it may be implemented with a material having light transmittance, but is not limited thereto.

The accommodating part **315** may have a circular shape when viewed from above, but the embodiment is not limited thereto. According to another embodiment, the accommodating part **315** may have an elliptical or polygonal shape. In this way, if the liquid **313** can be accommodated in the cavity of the receptor **312,** the embodiment can be implemented in various shapes of the cavity.

The membrane **311** serves to confine the liquid **313** inside the accommodating part **315** of the receptor **312.** The membrane **311** may be expressed by replacing it with a thin film or a fluidized membrane. For example, the membrane **311** may seal the liquid **313** inside the receptor **312.**

Referring to FIG. 3a, for example, the membrane **311** may have a shape surrounding the liquid **313** located inside the accommodating part **315,** but is not limited thereto.

For example, the accommodating part **315** may have a hole or hollow shape, and the membrane **311** may be located at the upper side and the lower side of the liquid **313,** but is not limited thereto. That is, the membrane **311** may comprise a first membrane **311A** disposed on an upper surface of the receptor **312** and a second membrane **311B** disposed on a lower surface of the receptor **312,** and the liquid **313** may be positioned between the first layer **311A** and the second layer **311B.** At this time, the lower surface of the receptor **312** may be a surface facing the bobbin **110** in the optical axis **OA** direction, and the upper surface of the receptor **312** may be a surface located on the opposite side of the lower surface of the receptor **312.**

Referring to FIG. 3b, for example, the membrane **311** may serve to confine the liquid **313** together with the receptor **312** inside the accommodating part **315.** The accommodating part **315** may be in the form of a groove, the liquid **313** may be disposed inside the groove, and the membrane **311** may seal the opening of the groove. For example, the membrane **311** in FIG. 3b may be disposed on a lower surface of the receptor **312.**

Since the membrane **311** is disposed on a path through which light passes, it may have light transmittance.

When viewed from above, the membrane **311** may have a circular shape, but the embodiment is not limited thereto. According to another embodiment, when viewed from above, the membrane **311** may have an elliptical shape or a polygonal shape. In this way, as long as the liquid **313** can be confined with the receptor **312,** the membrane **311** can be implemented in various shapes.

The membrane **311** may comprise a material having elasticity so that the shape can be deformed by being pressed by the pressing portion.

To this end, the membrane **311** may be a transparent elastic optical membrane. Specifically, the membrane **311** may have high elastic properties and may be chemically stabilized.

For example, the membrane **311** may be made of a material such as polymer, glass, or plastic.

For example, the membrane 311 may be made of a polydimethyl siloxane (PDMS) elastomer, a poly methyl phenyl siloxane (PMPS) elastomer, a fluorosilicone elastomer, and a poly ether elastomer, or propylene oxide elastomer, or polyester elastomer.

In order to confine the liquid **313** together with the receptor **312,** the planar area (or diameter) of the membrane **311** may be larger than the planar area (or diameter) of the accommodating part **315.** The driving force transmitted from the pressing portion to the membrane **311** may be applied to the liquid **313** and simultaneously applied to the receptor **312** and dispersed.

The lens driving device **100-1** may comprise a pressing portion for applying a driving force to the membrane **311** of the first lens part **310.**

The lens driving device **100-1** may move the second lens part **400** in the optical axis direction.

The lens driving device **100-1** may comprise a bobbin **110,** a coil **120,** and a magnet **130** being coupled to the second lens part **400.** Due to the interaction between the coil **120** and the magnet **130,** the bobbin **110** may be moved in the optical axis direction. At this time, the bobbin **110** may be a pressing portion for pressing the membrane **311** by transmitting a driving force to the membrane **311** of the first lens part **310.**

The lens driving device **100-1** may further comprise at least one among a housing **140,** an upper elastic member **150,** a lower elastic member **160,** a cover member **300,** and a base **210.**

In addition, the lens driving device **100-1** may further comprise a position sensor **170** and a sensing magnet **180.**

In addition, the lens driving device **100-1** may further comprise a circuit board **190** electrically connected to the position sensor **170.** In addition, the lens driving device **100-1** may further comprise a balancing magnet **185.**

The cover member **300** may be coupled to the base **210,** and may form an accommodation space together with the base **210.** For example, the cover member **300** may accommodate the bobbin **110** and the lens barrel **400** disposed inside the housing **140.**

The cover member **300** has an open lower portion, and may be in the form of a box comprising an upper plate **301** and a side plate **302,** and the lower portion of the cover member **300** can be coupled to the upper portion of the base **210** and the upper portion of the cover member **300.** The shape of the upper plate **301** of the cover member **300** may be a polygon, for example, a square or an octagon. The side plate of the cover member **300** may correspond to or face the side portion **141** of the housing **140,** and both may be disposed parallel to each other.

In the upper plate **301,** the cover member **300** may comprise an opening **303** for exposing the second lens part **400** coupled to the bobbin **110** to external light. The material of the cover member **300** may be a non-magnetic material such as SUS in order to prevent sticking to the magnet **130,** but is not limited thereto. In another embodiment, the cover member **300** may be formed of a magnetic material to function as a yoke to increase electromagnetic force due to the interaction between the coil **120** and the magnet **130.**

Referring to FIGS. 4a and 4b, the bobbin **110** may be equipped with a second lens part **400,** disposed in the housing **140,** and moved in the optical axis **OA** direction. The bobbin **110** may be expressed by replacing it with a "lens holder" or a "lens accommodating part".

The bobbin **110** may have an opening **13** through which the second lens part **400** is mounted.

For example, the opening **13** may be a through hole penetrating the bobbin **110** in the optical axis **OA** direction, and the opening **13** may have a circular shape, an elliptical shape, or a polygonal shape, but is not limited thereto.

The bobbin **110** may comprise at least one first coupling portion **113** being formed on an upper surface **14A** and being coupled to and fixed to the hole **151a** of the inner frame **151** of the upper elastic member **150.**

The bobbin **110** may comprise at least one second coupling portion **117** being formed on a lower surface **15B** and being coupled to and fixed to the hole **161a** of the inner frame **161** of the lower elastic member **160.**

For example, the first coupling portion **113** has a groove shape, and the second coupling portion **117** has a protrusion shape, but is not limited thereto. In another embodiment, each of the first coupling portion and the second coupling portion may be a groove, a protrusion, or a planar shape.

The bobbin **110** may comprise a first escape groove **112a** provided in an area of the upper surface **15A** corresponding to or aligned with the first frame connection part **153** of the upper elastic member **150.** The first escape groove **112a** may be a shape being recessed from the upper surface **15A** of the bobbin **110.**

In addition, the bobbin **110** may comprise a second escape groove **112b** provided in an area of the lower surface corresponding to or aligned with the second frame connection portion **163** of the lower elastic member **160.** The second escape groove **112b** may be a shape being recessed from the lower surface **15B** of the bobbin **110.**

When the bobbin **110** moves in a first direction by the first escape groove **112a** and the second escape groove **112b** of the bobbin **110,** spatial interference among the first frame connection part **153,** the second frame connection part **163,** and the bobbin **110** can be eliminated, and accordingly, the first frame connection part **153** and the second frame connection part **163** may be elastically deformed more easily.

In another embodiment, each of the first frame connection part and the second frame connection part and the bobbin are designed not to interfere with each other, so that the first escape groove and/or the second escape groove of the bobbin may not be provided.

The bobbin **110** may comprise a first stopper **114** being protruded from the upper surface toward the upper side direction. For example, since the height of the protruded portion **111,** which will be described later, is higher than the height of the first stopper **114,** the first stopper **114** may be omitted in another embodiment.

In addition, the bobbin **110** may comprise a second stopper **116** being protruded from the lower surface towards the lower side direction. The first stopper **114** and the second stopper **116** of the bobbin **110** may play the role of preventing the upper surface or lower surface of the bobbin **110** from direct collision with the inner wall of the cover member **300,** the lower surface of the receptor **312,** or the upper surface of the base **210,** even if the bobbin **110** moves beyond a prescribed range due to an external impact, and the like when the bobbin **110** moves in a first direction for auto-focusing.

The bobbin **110** may comprise at least one groove **105** for disposing the coil **120** on a side surface or an outer side surface.

The coil **120** may be directly wound or wound in the groove **105** of the bobbin **110** so that the coil **120** is disposed or seated in the groove **105** of the bobbin **110,** or rotates clockwise or counterclockwise with respect to the optical axis **OA.**

The shape and number of grooves **105** of the bobbin **110** may correspond to the shape and number of coils being disposed on the outer side surface of the bobbin **110.** In another embodiment, the bobbin **110** may not have a groove for seating the coil, and the coil may be directly wound or wound on the outer side surface of the bobbin **110** without a groove to be fixed.

The bobbin **110** may comprise first side portions and second side portions.

In another embodiment, the first side portions of the bobbin **110** may be expressed as "first side surfaces" and the second side portions may be expressed as "second side surfaces". The first side portions of the bobbin **110** may correspond to or face the magnet **130.** Each of the second side portions of the bobbin **110** may be disposed between two adjacent first side portions. For example, the groove **105** of the bobbin **110** may be provided to have a ring shape in the first side portions and the second side portions of the bobbin **110,** but is not limited thereto.

The coil **120** may be a driving coil being disposed on the outer side surface of the bobbin **110** and electromagnetically interacting with the magnet **130** being disposed on the housing **140.**

For example, the coil **120** may be disposed or wound inside the groove **105** of the bobbin **110.**

A driving signal (e.g., a driving current or voltage) may be applied to the coil **120** to generate electromagnetic force by interaction with the magnet **130.** The driving signal applied to the coil **120** may be a DC signal and/or an AC signal.

The AF movable unit may move in the first direction, for example, in the upward direction (+Z-axis direction) or the downward direction (-Z-axis direction) by the electromagnetic force due to the interaction between the coil **120** and the magnet **130.**

The lens driving device may be capable of both unidirectional driving and bidirectional driving for autofocusing. Here, the unidirectional driving refers to moving the AF movable unit in one direction, for example, the upward direction (e.g., +Z axis direction), based on the initial position of the AF movable unit, and bidirectional driving refers to moving the AF movable unit in both directions (e.g., upward or downward direction) based on the initial position of the AF movable unit.

By controlling the strength and/or polarity (e.g., the direction in which current flows) of the driving signal applied to the coil **120,** and by adjusting the strength and/or direction of the electromagnetic force by the interaction between the coil **120** and the magnet 130, it is possible to control the movement of the AF movable unit in a first direction, thereby performing an auto-focusing function.

AF movable unit may comprise a bobbin **110** elastically supported by the upper elastic member **150** and the lower elastic member **160,** and components mounted on the bobbin **110** to move together with the bobbin **110.** For example, the AF movable unit may comprise a bobbin **110,** a coil **120,** and/or a second lens part **400** mounted on the bobbin **110.**

For example, the coil **120** may be disposed on the bobbin **110** to have a closed loop shape. For example, the coil **120** may have a closed loop shape wound in a clockwise or counterclockwise direction about an optical axis, and may be wound or disposed on the outer side surface of the bobbin **110.**

In another embodiment, the coil **120** may be implemented in the form of a coil ring wound or disposed in a clockwise or counterclockwise direction about an axis perpendicular to the optical axis, and the number of coil rings may be the same as the number of magnets **130,** but is not limited thereto.

The coil **120** may be electrically connected to at least one of the upper elastic member **150** or the lower elastic member **160,** and may be electrically connected to the circuit board **190** through the upper elastic member **150** or/and the lower elastic member **160.** For example, by solder or conductive adhesive, the coil **120** is coupled to two among the upper springs of the upper elastic member **150,** or it can be coupled to two among the lower springs of the lower elastic member, but is not limited thereto.

For example, the coil **120** disposed on the bobbin **110** may be overlapped with the magnet 130 in a direction perpendicular to the optical axis.

The sensing magnet **180** is disposed on the bobbin **110.** For example, a seating groove **118a** for accommodating or disposing the sensing magnet **180** may be formed on the bobbin **110.** The balancing magnet **185** may be disposed on the bobbin **110.** For example, the bobbin **110** may have a seating groove **118b** in which the balancing magnet **185** is accommodated or disposed.

Each of the sensing magnet **180** and the balancing magnet **185** may be a unipolar magnetized magnet or a bipolar magnetized magnet.

Due to the interaction between the first coil **120** and the first magnet **130,** the sensing magnet **180** may move together with the bobbin **110** in the optical axis direction **OA,** the first position sensor **170** may detect the strength of the magnetic field of the sensing magnet **180** moving in the optical axis direction, and an output signal according to the detected result may be outputted. For example, the control unit **830** of the camera module or the control unit **780** of the terminal may detect displacement of the bobbin **110** in the optical axis direction based on the output signal outputted by the first position sensor **170.**

By disposing the balancing magnet **180** on the bobbin **110** to face each other in a direction perpendicular to the sensing magnet **180** and the optical axis, the effect of the magnetic field of the sensing magnet **180** can be canceled, and the weight balance of the AF movable unit can be adjusted, and thus an accurate AF operation can be performed.

In another embodiment, the position sensor **170** may be disposed on the bobbin **110,** and the sensing magnet and the balancing magnet are disposed in the housing **140** in response to the position sensor **170** or may be disposed on the cover member **300** in response to the position sensor **170.**

The housing **140** accommodates the bobbin **110,** in which the coil **120** is disposed, inside thereof.

Referring to FIGS. 5a to 5b, the housing **140** may be in the shape of a column having an opening as a whole, and may comprise a side portion and a corner portion.

The housing **140** may comprise an opening to accommodate the bobbin **110,** and the opening may be in the form of a through hole penetrating the housing **140** in the optical axis direction.

The side portions **141** of the housing **140** may correspond to the first side portions **110b-1** of the bobbin **110,** and the second side portions **142** of the housing **140** may correspond to the second side portions **110b-2** of the bobbin **110,** but is not limited thereto.

In the side portions **141-1** to **141-4** of the housing **140,** magnets **130 (130-1** to **130-4**) may be disposed or installed, and in any one (e.g., **142-1)** among the corner portions **142-1** to **142-4** of the housing **140,** a position sensor **170** may be disposed, but is not limited thereto.

In another embodiment, the magnet may be disposed on the corner portions of the housing, and the position sensor may be disposed on any one among the side portions of the housing.

The housing **140** may comprise a magnet seating part **141a** provided in the side portions **141-1** to **141-4** to support or accommodate the magnets **130-1** to **130-4.**

For example, the magnet seating part **141a** may be in the form of a hole penetrating through the side portions **141-1** to **141-4** of the housing **140,** but is not limited thereto, and may be in the form of a groove in another embodiment.

Each of the side portions **141-1** to **141-4** of the housing **140** may be disposed parallel to any corresponding one among the side plates of the cover member **300.**

In addition, in order to prevent the upper surface of the housing **140** from directly colliding with the inner surface of the cover member **300** or the lower surface of the receptor **312,** a stopper **143** may be provided on an upper surface of the housing **140.**

At least one first coupling portion **144** for coupling with the hole **152a** of the first outer frame **152** of the upper elastic member **150** may be provided on an upper surface of the housing **140.** In addition, at least one second coupling portion **147** for coupling with the hole **162a** of the second outer frame **162** of the lower elastic member 160 may be provided on a lower surface of the housing **140.**

For example, each of the first coupling portion **144** and the second coupling portion **147** may have a protrusion shape, but is not limited thereto, and may have a groove or planar shape in another embodiment.

In order to prevent the lower surface or the bottom of the housing **140** from being collided with the base **210,** which will be described later, the housing **140** may comprise at least one stopper **145** being protruded from a lower surface.

A guide groove **148** facing the groove part **212** of the base **210** may be provided on a lower portion or lower surface of the corner portions **142-1** to **142-4** of the housing **140.**

For example, the guide groove **148** of the housing **140** and the groove part **212** of the base **210** may be coupled to each other by an adhesive member, and the housing **140** may be coupled to the base **210.**

The magnet **130** may be disposed in the housing **140.**

For example, at the initial position of the bobbin **110,** the magnet **130** may be disposed in the housing **140** so that at least a portion is overlapped with the coil **120** in a direction perpendicular to the optical axis **OA.**

For example, the initial position of the bobbin **110** is the initial position of the AF movable unit (e.g., bobbin) in a state where power or a driving signal and a sensing signal are not applied to the coil **120,** and may be a position where the AF movable unit is placed as the upper elastic member **150** and the lower elastic member **160** are elastically deformed only by the weight of the AF movable unit.

In addition to this, the initial position of the bobbin **110** may be a position where the AF movable unit is placed when gravity acts in the direction from the bobbin **110** to the base **210,** or vice versa, when gravity acts in the direction from the base **210** to the bobbin **110.** The AF movable unit may comprise a bobbin **110** and components mounted on the bobbin **110,** for example, a coil **120.**

The shape of the magnet **130** may be a rectangular parallelepiped shape with a shape corresponding to the side portions **141-1** to **141-4** of the housing **140,** but is not limited thereto, and the surface facing the coil **120** may be formed to correspond to or coincide with the curvature of the corresponding surface of the coil **120.**

The magnet **130** may be a unipolar magnetized magnet disposed such that a first surface facing the coil **120** is an N pole and a second surface opposite to the first surface is an S pole, but is not limited thereto, and an N pole and S poles may be opposite. In another embodiment, the magnet **140** may be a bipolar magnetized magnet.

For example, the magnet **130** may be a bipolar magnetized magnet divided into two in a direction perpendicular to the optical axis. For example, the magnet **130** may comprise a first magnet part, a second magnet part, and a non-magnetic partition wall disposed between the first magnet part and the second magnet part.

For example, the first magnet part may be located on an upper portion, the second magnet part may be located on a lower portion, and the first magnet part and the second magnet part may be spaced apart from each other, but is not limited thereto.

The non-magnetic partition wall is a portion having substantially no magnetism and may comprise a section having little polarity, and may be filled with air or made of a non-magnetic material.

In the embodiment, the number of magnets **130** is four, but is not limited thereto, and the number of magnets **130** may be at least two or more, and the surface of the magnet **130** facing the coil **120** may be formed in a flat surface, but is not limited thereto and may be formed in a curved surface.

The magnet **130** may be disposed on at least two or more on the side portions of the housing **140** facing each other, and may be disposed to face each other.

For example, magnets **130-1** to **130-4** may be disposed on the side portions **141-1** to **141-4** of the housing **140.** Two pairs of magnets **130-1** to **130-4** facing each other to be crossed may be disposed on the side portions **141-1 to 141-4** of the housing **140.** At this time, a plane of each of the magnets **130-1** to **130-4** may have a substantially rectangular shape, or unlike this, a triangular shape or a rhombus shape.

In the embodiment illustrated in FIGS. 5a to 5b, the magnets **130-1** to **130-4** are disposed in the housing **140,** but is not limited thereto. In another embodiment, the housing **140** may be omitted, and the magnets **130-1** to **130-4** and the position sensor **170** may be disposed on the cover member **300.**

In another embodiment, the housing **140** is not omitted, and the magnets **130-1** to **130-4** and the position sensor **170** may be disposed in the cover member **300.**

When the magnets and the position sensor are disposed in the cover member, the magnets may be disposed on side plates of the cover member **300,** the position sensor may be disposed in the corner portion of the cover member **300,** and at this time, the corner portion of the cover member may be positioned between the side plates of the cover member **300.**

In another embodiment, the magnet may be disposed on the bobbin **110,** and the coil may be disposed in the housing.

Referring to FIG. 6, the position sensor **170** may be disposed, fixed, or coupled to the housing **140.** The circuit board **190** may be disposed in the housing **140** and may be electrically connected to the position sensor **170.** For example, the position sensor **170** may be disposed or mounted on the circuit board **190** disposed in the housing **140.**

For example, a groove **142a** for mounting or disposing the circuit board **190** may be provided in one side portion (e.g., **141-1)** of the housing **140,** but is not limited thereto. The circuit board **190** may be coupled to the housing **140** by an adhesive or the like.

The circuit board **190** may comprise a body **190-1,** and an extended portion **190-2** being connected to the body **190-1.**

The body **190-1** may be provided with a plurality of terminals **19-1** to **19-n** (natural numbers, where **n>1)** for being electrically connected to the outside. For example, the plurality of terminals **19-1** to **19-n** may be disposed in a line at a lower end of the outer side surface of the body **190-1.**

The body **190-1** may be disposed on an outer side surface of any one side portion (e.g., **142-2)** of the housing **140** adjacent to the first corner portion **142-1** of the housing **140.** The body **190-1** may comprise a lower portion **91a** provided with terminals **19-1** to **19-n,** and an upper part **91b** being protruded from the lower part **91a** toward the upper side. In the lower part **91a** of the body **190-1,** a groove or opening **51** may be provided for exposing the magnet **130-2** disposed on any one side portion of the housing **140.**

In the lower part **91a** of the body **190-1,** coupling portions **5a** and **5b** for connection with the outer frame **162** of the lower side springs **160a** and **160b** may be provided.

The upper portion **91b** of the body **190-1** may be connected to one side region of the upper surface of the lower portion **91a** of the body **190-1,** and may be connected to the extended portion **190-2.**

The extended portion **190-2** may be disposed on the first corner portion **142-1,** and one end (e.g., the body **190-1)** being disposed on the side portion (e.g., **142-2)** of the housing **140,** and it can be bent from one end of the upper portion **91b** of the body **190-1.** For example, a bent portion **191** may be formed between the upper portion **91b** of the body **190-1** and the extended portion **190-2.**

On a first surface of the extended portion **190-2** of the circuit board **190,** pads for electrically connecting to the position sensor **170** may be provided, and the pads of the circuit board **190** may be electrically connected with any corresponding one among the plurality of terminals **19-1** to **19-n** through the wires or circuit patterns provided on the circuit board **190.** The plurality of terminals **19-1** to **19-n** may comprise terminals being electrically connected to the position sensor **170.**

The position sensor **170** may be disposed on the first surface or the inner side surface of the extended portion **190-2** of the circuit board **190.** Here, the first surface of the extended portion **190-2** mounted on the housing **140** may be an inner side surface of the housing **140** or a surface facing the outer side surface of the bobbin **110.**

The position sensor **170** may be disposed at any one (e.g., **142-1)** among the corner portions of the housing **140,** and the position of the bobbin **110** may be detected through the magnetic field generated by the sensing magnet **180.**

The position sensor **170** may detect the strength of the magnetic field generated from the sensing magnet **180** mounted on the bobbin **110** according to the movement of the bobbin **110,** and an output signal (e.g., an output voltage) according to the detected result may be outputted.

The position sensor **170** may be implemented in the form of a driver comprising a Hall sensor, or may be implemented as a single position detection sensor such as a Hall sensor. The position sensor **170** may comprise four terminals (e.g., two input terminals and two output terminals) and may be electrically connected to the circuit board **190.**

For example, a driving signal inputted to any terminals of the circuit board **190** may be provided to the position sensor **170,** and an output of the position sensor **170** may be outputted through other terminals of the circuit board **190.**

Referring to FIG. 7, the upper elastic member **150** and the lower elastic member 160 are coupled to the bobbin **110** and the housing **140,** and support the bobbin **110.**

For example, the upper elastic member **150** may be coupled with an upper portion, an upper surface, or an upper end of the bobbin **110** and an upper portion, an upper surface, or an upper end of the housing **140;** and the lower elastic member **160** may be coupled with a lower portion, a lower surface, or a lower end of the bobbin **110** and a lower portion, a lower surface, or a lower end of the housing **140.**

At least one of the upper elastic member **150** or the lower elastic member **160** may be divided or separated into two or more. In another embodiment, the upper elastic member **150** or the lower elastic member **160** may not be separated or divided.

The upper elastic member **150** and the lower elastic member **160** may be implemented as leaf springs, but are not limited thereto, and may be implemented as coil springs, suspension wires, and the like.

The upper elastic member **150** may comprise: a first inner frame **151** being coupled with an upper portion, an upper surface, or an upper end of the bobbin **110;** a first outer frame **152** being coupled with an upper portion, an upper surface, or an upper end of the housing **140;** and a first frame connection part **153** connecting the first inner frame **151** and the first outer frame **152.**

In the first inner frame **151** of the upper elastic member **150,** a hole **151a** being coupled to the first coupling portion **113** of the bobbin **110** may be provided; and in the first outer frame **152,** a hole **152a** being coupled with the first coupling portion **144** of the housing **140** may be provided.

The lower elastic member **160** may comprise a first lower spring **160a** and a second lower spring **160b** being spaced apart from each other.

Each of the first and second lower springs **160a and 160b** may comprise: a second inner frame **161** being coupled with a lower portion, a lower surface, or a lower end of the bobbin **110;** a second outer frame **162** being coupled with a lower portion, a lower surface, or a lower end of the housing **140;** and a second frame connection part **163** connecting the second inner frame **161** and the second outer frame **162.**

In addition, in the second inner frame **161** of each of the first and second lower springs **160a** and **160b,** a hole **161a** for coupling with the second coupling portion **117** of the bobbin **110** may be provided by soldering or a conductive adhesive member. In the second outer frame **162** of each of the first and second lower springs **160a** and **160b,** a hole **162a** for coupling with the second coupling portion **147** of the housing **140** may be provided.

At one end of the second inner frame **161** of the first lower spring, a first bonding part **7a** for coupling to one end of the coil **120** by soldering or a conductive adhesive may be provided; and at one end of the second inner frame **161** of the second lower spring **160b,** a second bonding part **7b** for coupling to the other end of the coil **120** by soldering or a conductive adhesive may be provided.

At one end of the second outer frame **161** of the first lower spring **160a,** a third bonding part **6a** for coupling to the first coupling portion **5a** of the circuit board **190** by soldering or a conductive adhesive may be provided. At one end of the second outer frame **161** of the second lower spring **160b,** a fourth bonding part **6b** for coupling to the second coupling portion **5b** of the circuit board **190** by soldering or a conductive adhesive may be provided.

The third bonding part **6a** and the fourth bonding part **6b** may be electrically connected to corresponding two terminals among the plurality of terminals **19-1** to **19-n** of the circuit board **190.**

A driving signal may be provided to the coil **120** by the circuit board **190** and the first and second lower springs **160a** and **160b.**

Each of the first frame connection part **153** and the second frame connection part **163** of the upper elastic member **150** and the lower elastic member **160** is formed to be bent or curved at least once or more so that a pattern having a predetermined shape can be formed.

The bobbin **110** may be flexibly (or elastically) supported by the rising and/or lowering operation in the first direction through position change and micro-deformation of the first and second frame connection parts **153** and **163.**

In order to absorb and buffer the vibration of the bobbin **110,** the lens driving device **100-1** may further comprise a first damper (not shown) disposed between the upper elastic member **150** and the housing **140.** For example, a first damper (not shown) may be disposed in a space between the first frame connection part **153** of the upper elastic member **150** and the housing **140.**

In addition, for example, the lens driving device **100** may be further provided with a second damper (not shown) disposed between the housing **140** and the second frame connection portion **163** of each of the first and second lower springs **160a** and **160b.**

In addition, for example, a damper (not shown) may be further disposed between the inner side surface of the housing **140** and the outer circumferential surface of the bobbin **110.**

The base **210** may have an opening of the bobbin **110** and/or an opening corresponding to the opening of the housing **140,** and it may have a shape that matches or corresponds to the cover member **300,** for example, a rectangular shape.

The base **210** may be provided with a step **211** at the lower end of the side surface so that an adhesive can be applied thereto when the cover member **300** is being attached and fixed. At this time, the step **211** may guide the cover member **300** being coupled to the upper side, and may face the lower end of the side plate of the cover member **300.**

The base **210** may be disposed below the bobbin **110** and/or the housing **140.**

For example, the base **210** may be disposed below the lower elastic member **160.**

A coupling portion **212** corresponding to the guide groove **148** of the housing **140** may be provided at an edge of an upper surface of the base **210.** The coupling portion of the base **210** may be in the form of a groove, but is not limited thereto, and in another embodiment, it may be in the form of a protruded portion or a column portion being protruded from the upper surface of the base.

Referring to FIG. 9, the second lens part **400** may comprise a lens barrel **410** and a lens array **420** mounted on the lens barrel **410.** The lens array **420** may comprise at least one lens. For example, the lens array **420** may be a solid lens and may be formed of glass or plastic, but is not limited thereto.

The lens barrel **400** may comprise: a first portion **411;** a second portion **412** disposed on the first portion **411;** and a third portion **413** connecting the first portion **411** and the second portion **412.**

The first portion **411** may be expressed by replacing it with a "lower portion", the second portion **412** may be expressed by replacing it with an "upper portion", and the third portion **413** may be expressed by replacing it with a "middle portion" or a "connection portion".

The first portion **411** is a portion coupled to the bobbin **110** and may have a cylindrical or polyhedral structure, and a cut surface in a direction perpendicular to the optical axis may have a circular shape, an elliptical shape, or a polygonal shape, but is not limited thereto. For example, the first portion **411** may be formed with a screw thread or a screw groove for being coupled with the bobbin **110,** and the bobbin **110** may be formed with a screw thread or a screw groove for being coupled to the first part **411.** In another embodiment, the first portion of the lens barrel and/or each thread or thread groove of the bobbin may be omitted.

In addition, the first portion **411** may comprise a first opening exposing a portion (e.g., a lower surface or a lower surface) of the lens array **420.** The diameter of the first portion **411** may be smaller than the diameter of the opening **13** of the bobbin **110.**

The second part **412** is located on an upper side of the first portion **411,** and may have a cylindrical or polyhedral structure, and a cutting plane in a direction perpendicular to the direction from the first portion **411** to the second part **412** may be a circular shape, an elliptical shape, or a polygonal shape. In addition, the second portion **412** may comprise a second opening exposing another portion (e.g., an upper end or an upper surface) of the lens array **420.** For example, the diameter of the second portion **412** may be smaller than the diameter of the first portion **411.**

For example, the third portion **413** may be positioned between the first portion **411** and the second portion **412,** and the outer side surface of the third portion **413** may be a plane parallel to a direction perpendicular to the optical axis, but is not limited thereto. In another embodiment, the outer side surface of the third portion **413** may be an inclined surface inclined with respect to the lower surface of the first portion **411** or the upper surface of the second portion **412.** For example, an interior angle formed by the outer side surface of the second portion **412** and the outer side surface of the third portion **413** may be an obtuse angle or a right angle.

For example, in another embodiment, the diameter of the third part may gradually decrease from the first portion to the second portion, and the diameter of the third portion may be within a range between the diameter of the first portion and the diameter of the second portion.

Referring to FIGS. 4a, 8a, 8b, and 10, the bobbin **110** may comprise a protruded portion **111** being protruded from the upper surface **15A** toward the membrane **311** of the first lens part **310.**

The protruded portion **111** may be expressed by replacing it with a "pressing portion" or a shaper.

The protruded portion **111** of the bobbin **110** may be in contact with the membranes **311B** and **311** of the lens part **310,** and it may be a pressing portion that presses the membranes **311B** and **311** as the bobbin **110** moves in an optical axis direction. In addition, the protruded portion **111** may function as a shaper to make a shape of a liquid lens to have a desired curvature in order to adjust a focal length.

The protruded portion **111** may be protruded from the upper surface **15A** of the bobbin **110** in an optical axis direction. The upper end or upper surface of the protruded portion **111** may be positioned higher than the upper end or upper surface of the first stopper **114.**

In addition, the upper end or upper surface of the protruded portion **111** based on the upper surface of the bobbin **110** may be positioned higher than the upper end or upper surface of the first coupling portion **113** of the bobbin **110.** In particular, when the first coupling portion **113** of the bobbin **110** has a protrusion shape, the upper end or upper surface of the protruded portion **111** may be positioned higher than the upper end or upper surface of the protrusion of the bobbin **110.**

For example, the upper surface of the protruded portion **111** may be located closer to the first lens part **310** or the membranes **311B** and **311** than the upper surface of the first stopper **114** and the upper surface of the first coupling portion **113.**

The upper surface or upper end of the protruded portion **111** may be positioned higher than the upper surface or upper end of the second lens part **400** coupled to the bobbin **110.**

For example, the upper surface or upper end of the protruded portion **111** of the bobbin **110** may be located closer to the membranes **311B** and **311** of the first lens part **310** than the upper surface or upper end of the second lens part **400** coupled to the bobbin **110.**

For example, the upper surface or upper end of the protruded portion **111** of the bobbin **110** may be positioned higher than the upper surface or upper end of the lens barrel **410** of the second lens part **400.** For example, the upper surface or upper end of the protruded portion **111** of the bobbin **110** may be located closer to the membranes **311B** and **311** of the first lens part **310** than the upper surface or upper end of the lens barrel **410.**

For example, the upper surface of the protruded portion **111** may be positioned higher than the upper surface of the second portion **412** of the lens barrel **410.** For example, the upper surface of the protruded portion **111** may be located closer to the membranes **311B** and **311** of the first lens part **310** than the upper surface of the second portion **412** of the lens barrel **410.**

In addition, for example, the upper surface of the protruded portion **111** may be positioned higher than the upper surface of the upper elastic member **150.** For example, the upper surface of the protruded portion **111** may be located closer to the membranes **311B** and **311** of the first lens part **310** than the upper surface of the upper elastic member **150.**

The protruded portion **111** may be spaced apart from the second lens part **400** and may be located outside the second lens part **400.** For example, the protruded portion **111** may be disposed to surround the second lens part **400.**

For example, the protruded portion **111** may be positioned outside the lens barrel **410** of the second lens part **400.** For example, the protruded portion **111** may be spaced apart from the lens barrel **410** and may be disposed to surround the lens barrel **410.**

For example, the diameter of the protruded portion **111** may be greater than the diameter of the lens barrel **410.** For example, the diameter of the protruded portion **111** may be greater than the diameter of the first portion **411** of the lens barrel **410.** Here, the diameter of the protruded portion **111** may be a cross-sectional length of the protruded portion **111** in a direction perpendicular to the optical axis **OA,** and the diameter of the lens barrel **410** may be a cross-sectional length of the lens barrel **410** in a direction perpendicular to the optical axis **OA.**

For example, the diameter of the protruded portion **111** may be smaller than the diameter of the accommodating part of the receptor **312.** Or, the diameter of the protruded portion **111** may be smaller than a cross-sectional length in a direction perpendicular to the optical axis of the liquid **313** located in the accommodating part of the receptor **312.**

For example, the center **309** of the first lens part **310** and the center **308** of the second lens part **400** may be aligned or overlapped with each other, but is not limited thereto. For example, the center of the first lens part **310** may be the center of the liquid **313** located in the receptor **312,** and may be aligned with or overlapped with the optical axis **OA.** In addition, for example, the center of the second lens part **400** may be the center of the lens barrel **410** or the center of the lens array **420.**

In addition, referring to FIG. 10, the distance **D11** between the optical axis **OA** and the protruded portion **111** in a direction perpendicular to the optical axis **OA** may be greater than the distance **D12** between the optical axis **OA** and the outer side surface of the lens barrel **400** in a direction perpendicular to the optical axis **OA (D11>D12).**

For example, the protruded portion **111** may be formed in the same shape as the opening **13** of the bobbin **110** along the opening **13** of the bobbin **110.** For example, when viewed from above, the shape of the protruded portion **111** may be the same shape as the opening **13** of the bobbin **110,** for example, a circular shape, an elliptical shape, or a polygonal shape.

For example, the regions of the membranes **311B** and **311** being in contact with the protruded portion **111** may have the same shape as the protruded portion **111.**

For example, the inner side surface **11A** of the protruded portion **111** may be parallel to the inner side surface **12A** of the bobbin **110** and may be located on the same line, but is not limited thereto. In another embodiment, the inner side surface **11A** of the protruded portion **111** may have a step in a direction perpendicular to the optical axis and the inner side surface **12A** of the bobbin **110.**

The distance between the protruded portion **111** and the side plate **302** of the cover member **300** in a direction perpendicular to the optical axis is smaller than the distance between the lens barrel **410** and the side plate **302** of the cover member **300** in a direction perpendicular to the optical axis.

For example, the distance between the protruded portion **111** and the side plate **302** of the cover member **300** in a direction perpendicular to the optical axis may be smaller than the distance between the first portion **411** of the lens barrel **410** and the side plate **302** of the cover member **300** in a direction perpendicular to the optical axis.

Referring to FIG. 8a, the distance **D1** between the protruded portion **111** and the inner side surface of the housing **140** in a direction perpendicular to the optical axis **OA** may be less than the distance **D2** between the outer side surface of the lens barrel **410** and the inner side surface of the housing **140** in a direction perpendicular to the optical axis **OA (D1<D2).**

For example, the distance between the protruded portion **111** and the inner side surface of the housing **140** in a direction perpendicular to the optical axis may be smaller than the distance between the outer side surface of the first part **411** of the lens barrel **410** and the inner side surface of the housing **140** in a direction perpendicular to the optical axis.

In addition, for example, the distance between the protruded portion **111** and the side plate **302** of the cover member **300** in a direction perpendicular to the optical axis may be larger than the distance between the coil **120** and the side plate **302** of the cover member **300** in a direction perpendicular to the optical axis, but in another embodiment, the former may be the same as or smaller than the latter.

A distance between the protruded portion **111** and the side plate **302** of the cover member **300** in a direction perpendicular to the optical axis may be larger than the distance between the sensing magnet **180** and the side plate **302** of the cover member **300** in a direction perpendicular to the optical axis, but in another embodiment, the former may be the same as or smaller than the latter.

For example, at the initial position of the bobbin **110,** the protruded portion **111** may be in contact with the membranes **311B** and **311.** For example, the protruded portion **111** of the bobbin **110** may be coupled or attached to the membranes **311B** and **311** by an adhesive. At this time, at the initial position of the bobbin, the protruded portion **111** does not press the membranes **311B** and **311,** and a driving force may not be delivered to the membranes **311B** and **311.** That is, at the initial position of the bobbin **110,** the membranes **311B** and **311** of the first lens part **310** may have a planar shape parallel to the direction perpendicular to the optical axis **OA,** and the first lens part **310** may have a planar lens shape.

In another embodiment, at the initial position of the bobbin **110,** the protruded portion **111** of the bobbin **110** may not be in contact with the membranes **311B** and **311,** and may be located apart from the membranes **311B** and **311.** In this case, the protruded portion **111** of the bobbin **110** may come into contact with the membranes **311B** and **311** when the bobbin **110** is being moved by a predetermined distance from the initial position toward the membranes **311B** and **311.**

For example, the separation distance between the protruded portion **111** of the bobbin **110** and the membranes **311B** and **311** at the initial position of the bobbin **110** may be smaller than a stroke range of the bobbin **110** for AF driving.

When the upper surface of the protruded portion **111** is in contact with the membranes **311B** and **311** to press the membranes **311B** and **311,** since the membranes **311B** and **311** and the liquid **313** become convex toward the bobbin **110,** the first lens part **310** may have a convex lens shape. The curvature of the convex lens of the first lens part **310** may be changed based on the pressure of the protruded portion **111** pressing the membranes **311B** and **311,** and the focal length of the first lens part **310** can be adjusted.

In another embodiment, the protruded portion **111** may comprise a plurality of portions spaced apart from each other, and the membranes **311B** and **311** may be pressed by the plurality of portions.

For example, in another embodiment, the protruded portion, which is the pressing portion, may have a convex portion or a concave portion disposed or formed at a preset point (or location), and at this time, the portion that presses the liquid lens may be the uppermost end or upper surface of the convex portion. That is, in another embodiment, the pressing portion may comprise a plurality of intermittent and spaced apart convex portions or concave portions.

In general, in order to pressurize the membrane of a liquid lens, a pressing portion or actuator separate from a lens driving device equipped with a solid lens is required. However, in the embodiment, since the bobbin **110** of the lens driving device directly presses the first lens part **310** that is a liquid lens, there is no need for a separate pressing portion or actuator.

In addition, since the first lens part **310** is pressed by the bobbin **110** regardless of the shape of the lens barrel mounted on the bobbin **110,** the embodiment may serve as a pressing portion without restrictions on the lens barrel.

In addition, since the protruded portion **111** located on the outside of the lens barrel presses the membranes **311B** and **311** and the liquid **313,** the size (e.g., diameter) of the convex lens of the first lens part **310** being formed may be increased.

In addition, the focal length of the second lens part **400** is adjusted by the lens driving device **100-1,** and at the same time, the focal length of the first lens part **310** may be adjusted due to the pressing of the protruded portion **111** of the bobbin **110.** In an embodiment, the focal length of the lens module **200-1** may be finely adjusted by the first lens part **310.**

For example, for a close-up mode of the camera, the pressing portion may press the liquid lens of the first lens part **310.** For example, the pressing portion may press the liquid lens of the first lens part **310** to adjust the focal length of the close-up mode of the camera. For example, the close-up mode may be the case in which the distance between the subject and the camera (or lens module) may be 10 cm or less, 5 cm or less, or 2 cm or less.

Or, for example, when the subject is spaced apart by exceeding the separation distance in the close-up mode, the pressing portion may be spaced apart from the liquid lens in order to focus the subject.

Or, in an embodiment in which the pressing portion and the liquid lens are bonded or coupled, when the subject is separated by exceeding the separation distance in close-up mode, the shape of the liquid lens may become concave as the bobbin **110** moves to the infinity position to focus on the subject.

For example, in the case of unidirectional driving, the initial position of the bobbin **110** may correspond to an infinity position, and at the initial position of the bobbin **110,** the liquid lens is not pressed by the pressing portion, but the pressing portion may only be in contact with the liquid lens. At this time, the shape of the liquid lens may be a flat shape. As the bobbin **110** is moved from the initial position to the macro position, the pressing portion presses the liquid lens, and as a result, the liquid lens may have a convex lens shape toward the subject.

Or, for example, in the case of bidirectional driving, as the bobbin **110** moves from the initial position to the infinity position, the pressing portion may be spaced apart from the liquid lens. Or, in an embodiment in which the pressing portion is attached or coupled to the liquid lens, as the bobbin **110** moves from the initial position to the infinity position, the shape of the liquid lens may have a convex lens shape in a direction opposite to the direction directing from the camera (or lens module) toward the subject.

The macro position may be a position corresponding to the maximum stroke or maximum displacement of the bobbin in the direction of the subject, and the infinity position may be a position corresponding to the maximum stroke or maximum displacement of the bobbin **110** in a direction opposite to the direction directing toward the subject direction.

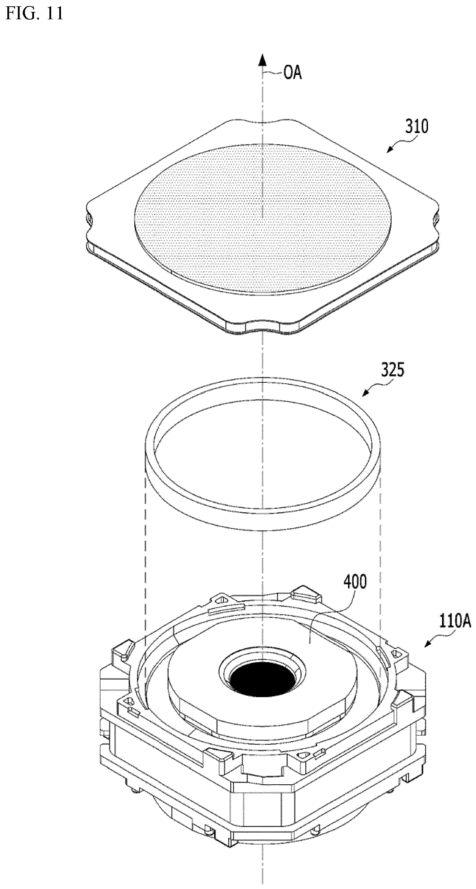

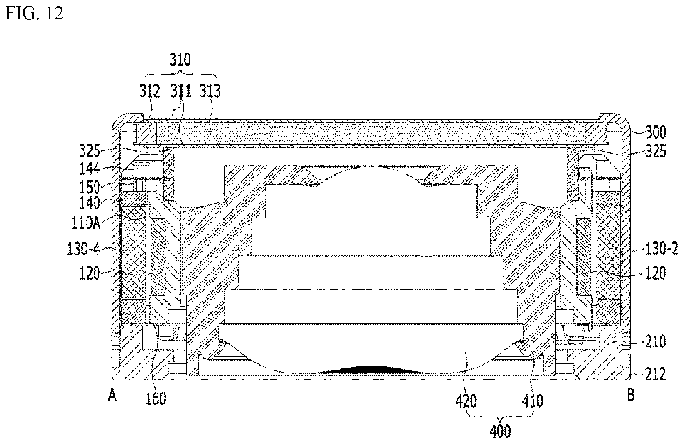

FIG. 11 shows a modified embodiment of the bobbin **110** of FIG. 4a, and FIG. 12 shows a cross-sectional view of a lens module according to the modified embodiment of FIG. 11.

In FIG. 4a, the protruded portion **111** as a pressing portion is formed as a part of the bobbin **110** so that the protruded portion **111** and the bobbin **110** are integrally formed, however, in FIGS. 11 and 12, the bobbin **110A** is not provided with a protruded portion **111,** and the pressing frame **325** may be provided separately from the bobbin **110A.** The pressing frame **325** may be express by replaced it with a "pressing portion" or a "frame".

The pressing frame **325** may be disposed between the upper surface of the bobbin **110A** and the membranes **311B** and **311** of the first lens part **310,** and the membranes **311B** and **311** and the liquid **313** may be pressurized by the movement of the bobbin **110A** in an optical axis direction.

For example, the shape of the pressing frame **325** viewed from above may be a circular shape, an elliptical shape, or a polygonal shape, but is not limited thereto.

The pressing frame **325** may be located outside the lens barrel **410** of the second lens part **400.** For example, a lower portion or a lower surface of the pressing frame **325** may be in contact with, coupled to, or attached to an upper surface of the bobbin **110.**

In addition, for example, an upper portion or an upper surface of the pressing frame **325** may be in contact with, or coupled to, or attached to the membranes **311B** and **311.**

The distance between the pressing frame **325** and the side plate **302** of the cover member **300** in a direction perpendicular to the optical axis is smaller than the distance between the lens barrel **410** and the side plate **302** of the cover member **300** in a direction perpendicular to the optical axis.

For example, the distance between the pressing frame **325** and the side plate **302** of the cover member **300** in a direction perpendicular to the optical axis may be smaller than the distance between the first portion **411** of the lens barrel **410** and the side plate **302** of the cover member **300** in a direction perpendicular to the optical axis.

For example, the pressing frame **325** may be spaced apart from the lens barrel **410** in a direction perpendicular to the optical axis.

The description of the protruded portion **111** described in FIGS. 1 to 10 may be applied or analogously applied to the pressing frame **325** of FIGS. 11 and 12, and all may be applied or analogously applied to the pressing portion according to the embodiment to be described hereinafter.

In addition, since the first lens part **310** is pressed by the bobbin **110** and the pressing frame **325** regardless of the shape of the lens barrel mounted on the bobbin **110,** the embodiment may serve as a pressing portion without restrictions on the lens barrel.

In addition, since the pressing frame **325** located on the outside of the lens barrel presses the membranes **311B** and **311** and the liquid **313,** the size (e.g., diameter) of the convex lens of the first lens part **310** being formed in the direction perpendicular to the optical axis of the convex may be increased.

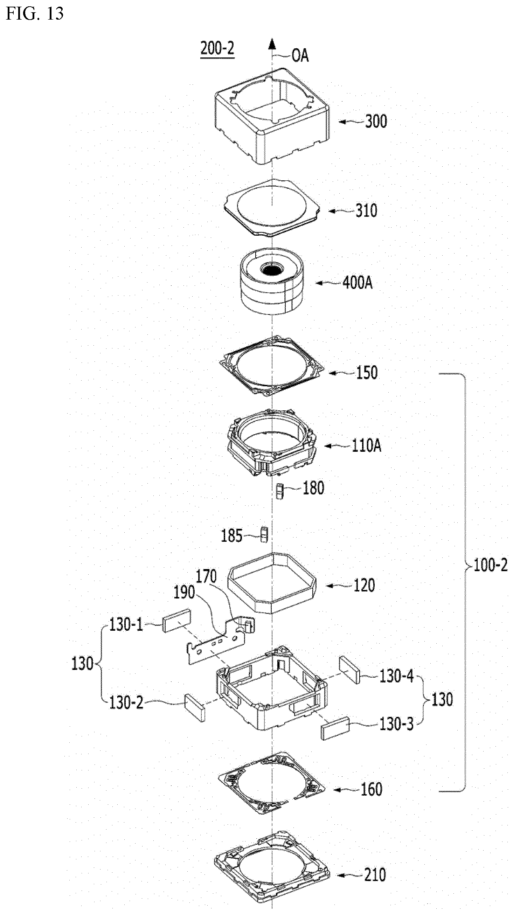

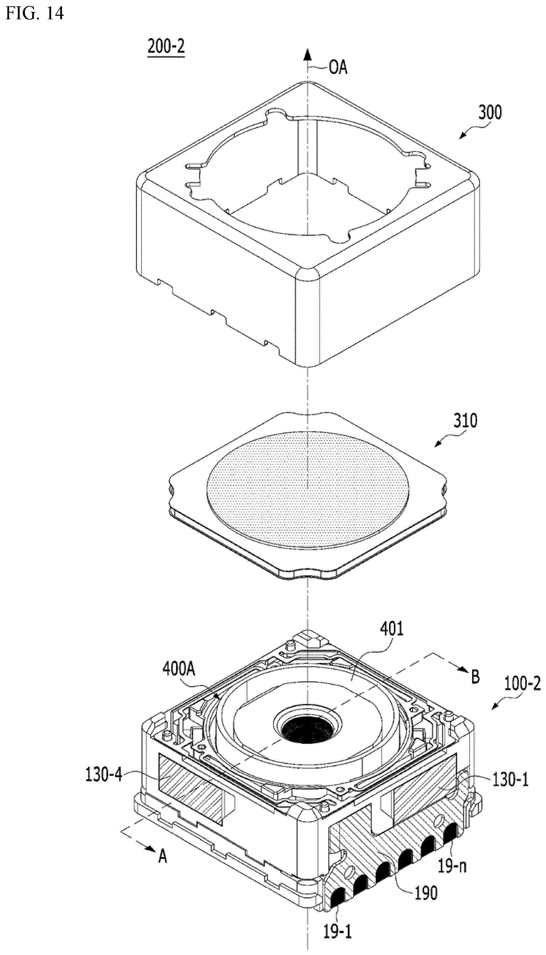

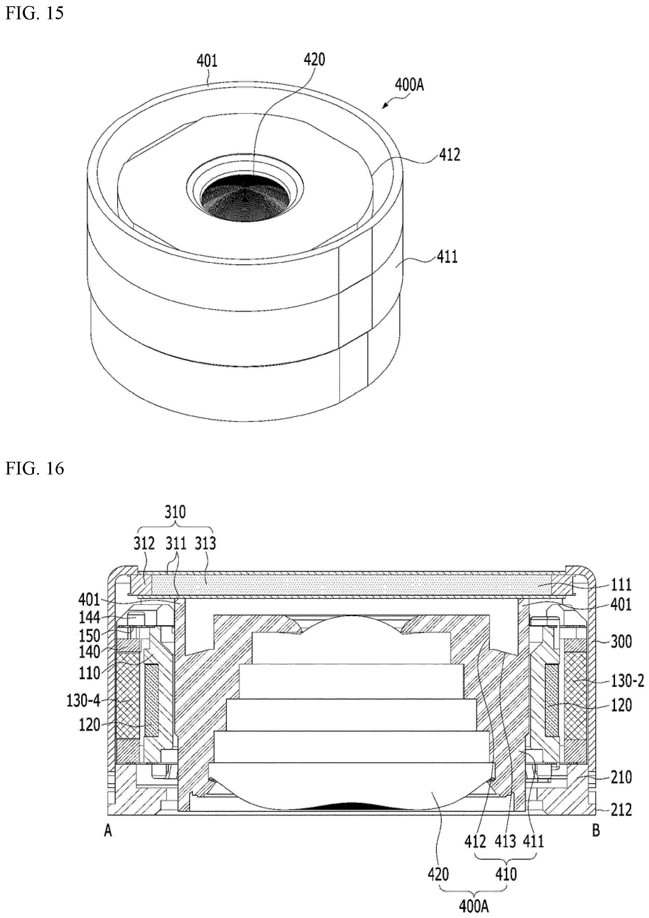

FIG. 13 is an exploded perspective view of a lens module **200-2** according to another embodiment; FIG. 14 is a perspective view in which a lens driving device **100-2** and a second lens part **400A** are coupled in FIG. 13; and FIG. 15 is a perspective view of a second lens part **400A** in FIG. 13; and FIG. 16 is a cross-sectional view of a lens module **200-2** in the AB direction in FIG. 14. In FIGS. 13 to 16, the same reference numerals as those of FIGS. 1 to 12 denote the same components, and descriptions of the same components are simplified or omitted.

Referring to FIGS. 13 to 16, the lens module **200-2** may comprise a first lens part **310,** a second lens part **400A,** and a lens driving device **100-2.**

In the lens module **200-2,** the protruded portion **111** of the lens module **200-1** is formed in the lens barrel **410A.**

That is, the protruded portion 111 of the bobbin **110** of the lens module **200-1** may be omitted, and the protruded portion **401** may be formed in the lens barrel **410A.**

Referring to FIGS. 15 and 16, for example, a lens barrel **410A** may comprise: a first portion **411** being coupled to the bobbin **110;** a second portion **412** being disposed on the first portion **411;** a third portion **413** connecting the first portion **411** and the second portion **412;** and a protruded portion **401** being protruded from the third portion **413** in the direction toward the optical axis **OA** or the membranes **311A** and **311.**

The protruded portion **401** may be protruded or extended from the outer side surface of the third portion **413** of the lens barrel **410A** toward the membranes **311A** and **311.** For example, the protruded portion **401** may be spaced apart from the second portion **412** of the lens barrel **410A.** Or, for example, the protruded portion **401** may be in contact with or adjacent to the first portion **411** of the lens barrel **410A.**

For example, the protruded portion **401** may be located closer to the first portion **411** than the second portion **412** of the lens barrel **410A.** In another embodiment, the protruded portion **401** may be located closer to the second portion **412** than the first portion **411** of the lens barrel **410A** or may be located at the same distance.

The protruded portion **401** of the lens barrel **410A** may be in contact with the membranes **311B** and **311** of the lens part **310,** and it may be a pressing portion for pressing the membranes **311B** and **311** as the lens barrel **410A** is moved in the optical axis direction together with the bobbin **110.** In addition, the protruded portion **401** may function as a shaper to shape a liquid lens to have a desired curvature in order to adjust a focal length.

For example, the upper surface or upper end of the protruded portion **401** of the lens barrel **410A** may be positioned higher than the upper surface or upper end of the bobbin **110.** For example, the upper surface or upper end of the protruded portion **401** may be located closer to the membranes **311B** and **311** of the first lens part **310** than the upper surface or upper end of the bobbin **110.**

The upper end or upper surface of the protruded portion **401** of the lens barrel **410A** may be positioned higher than the upper end or upper surface of the first stopper **114** of the bobbin **110.**

In addition, the upper end or upper surface of the protruded portion **401** of the lens barrel **410A** may be positioned higher than the upper end or upper surface of the first coupling portion **113** of the bobbin **110.** In particular, when the first coupling portion **113** of the bobbin **110** is in the form of a protrusion, the upper end or upper surface of the protruded portion **401** of the lens barrel **410A** may be positioned higher than the upper end or upper surface of the protrusion of the bobbin **110.**

For example, the upper surface of the protruded portion **401** of the lens barrel **410A** may be located closer to the membranes **311B** and **311** of the first lens part **310** than the upper surface of the first stopper **114** and the upper surface of the first coupling portion **113.**

The upper surface or upper end of the protruded portion **401** of the lens barrel **410A** may be positioned higher than the upper surface or upper end of the second portion **412** of the lens barrel **410A.**

For example, the upper surface or upper end of the protruded portion **401** may be located closer to the membranes **311B** and **311** of the first lens part **310** than the upper surface or upper end of the second part **412** of the lens barrel **410A.**

In addition, for example, the upper surface of the protruded portion **401** may be positioned higher than the upper surface of the upper elastic member **150.** For example, the upper surface of the protruded portion **401** may be located closer to the membranes **311B** and **311** of the first lens part **310** than the upper surface of the upper elastic member **150.**

The protruded portion **401** may be spaced apart from the bobbin **110.**

In addition, for example, at least a portion of the protruded portion **401** may be protruded out of the opening of the bobbin **110.** In addition, for example, at least another portion of the protruded portion **401** may be located inside the bobbin **110.**

For example, the diameter of the protruded portion **401** may be smaller than the diameter of the opening of the bobbin **110.**

For example, the diameter of the protruded portion **401** may be the same as or smaller than the diameter of the first portion **411** of the lens barrel **410A.** Here, the diameter of the protruded portion **401** may be a cross-sectional length of the protruded portion **401** in a direction perpendicular to the optical axis **OA.**

For example, the diameter of the protruded portion **401** may be smaller than the diameter of the accommodating part of the receptor **312.** Or, the diameter of the protruded portion **401** may be smaller than the cross-sectional length of the liquid **313** located inside the accommodating part **315** of the receptor **312** in a direction perpendicular to the optical axis.

For example, the protruded portion **401** may be formed in the same shape as the opening **13** of the bobbin **110** along the opening **13** of the bobbin **110.** For example, when viewed from above, the shape of the protruded portion **401** may be the same shape as the opening **13** of the bobbin **110,** for example, a circular shape, an elliptical shape, or a polygonal shape.

For example, regions of the membranes **311B** and **311** being in contact with the protruded portion **401** may have the same shape as the protruded portion **111.**

For example, the outer side surface of the protruded portion **401** may be parallel to and collinear with the outer side surface of the first portion **411** of the lens barrel **410A,** but is not limited thereto. In another embodiment, the outer side surface of the protruded portion **401** may have a step in a direction perpendicular to the optical axis and the outer side surface of the lens barrel **410A.**

For example, the distance between the protruded portion **401** and the side plate **302** of the cover member **300** in a direction perpendicular to the optical axis may be greater than the distance between the bobbin **110** and the side plate **302** of the cover member **300** in a direction perpendicular to the optical axis.

In addition, for example, the distance between the protruded portion **401** and the side plate **302** of the cover member **300** in a direction perpendicular to the optical axis may be larger than the distance between the coil **120** and the side plate **302** of the cover member **300** in a direction perpendicular to the optical axis.

The distance between the protruded portion **401** and the side plate **302** of the cover member **300** in a direction perpendicular to the optical axis may be larger than the distance between the sensing magnet **180** and the side plate **302** of the cover member **300** in a direction perpendicular to the optical axis.

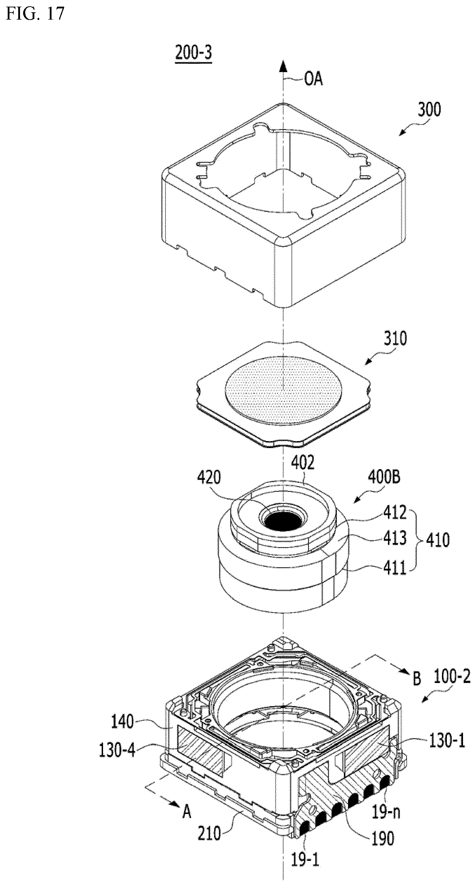

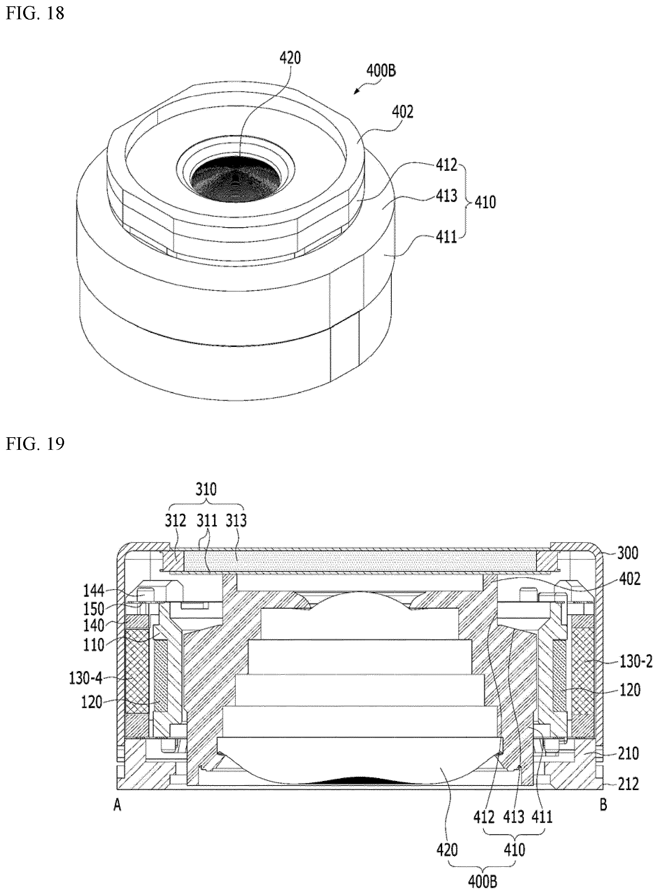

FIG. 17 is an exploded perspective view of a lens module **200-3** according to another embodiment; FIG. 18 is a perspective view of a second lens part **400B** in FIG. 17; and FIG. 19 is a cross-sectional view of the lens module **200-3** in the **AB** direction in FIG. 17.

In FIGS. 17 to 19, the same reference numerals as those of FIGS. 1 to 16 denote the same components, and descriptions of the same components are simplified or omitted.

Referring to FIGS. 17 to 19, the lens module **200-3** may comprise a first lens part 310, a second lens part **400B,** and a lens driving device **100-2.**

Compared with the lens barrel **400A** in FIG. 15, in the lens barrel **400B** of the second lens part **400B,** a protruded portion **402** may be disposed on an upper surface of the second portion **412** of the lens barrel **400B.**

That is, the lens barrel **400B** may comprise: a first portion **411** for coupling with the bobbin **110;** a second portion **412** being disposed on the first portion **411;** a third portion **413** connecting the first portion **411** and the second portion **412;** and a protruded portion **402** being protruded from an upper surface of the second portion **412** in an optical axis direction or toward membranes **311A** and **311** of the first lens part **310.**

The protruded portion **402** may be spaced apart from the first portion **411.** The point that the protruded portion **402** is formed on an upper surface of the second portion **412** of the lens barrel **400B** is only different from the protruded portion **401** of the lens barrel **400A** in FIG. 15, and the description of the protruded portion **401** may be applied or analogically applied to the protruded portion **402** in FIG. 18.

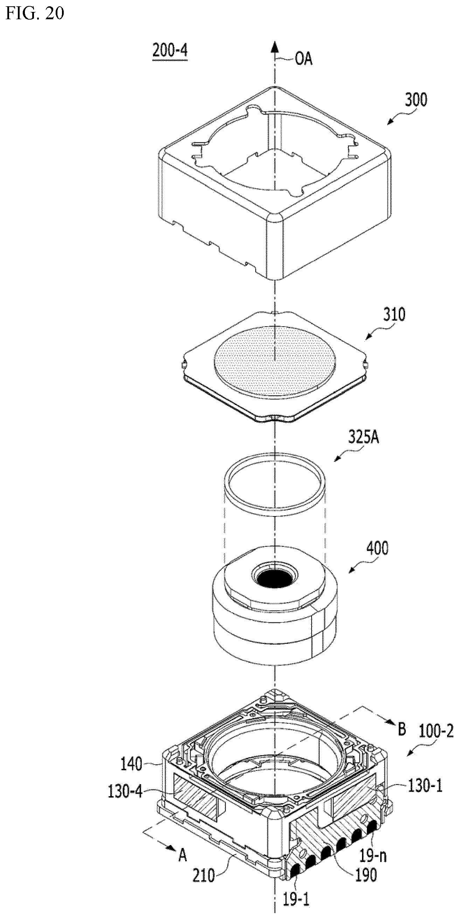

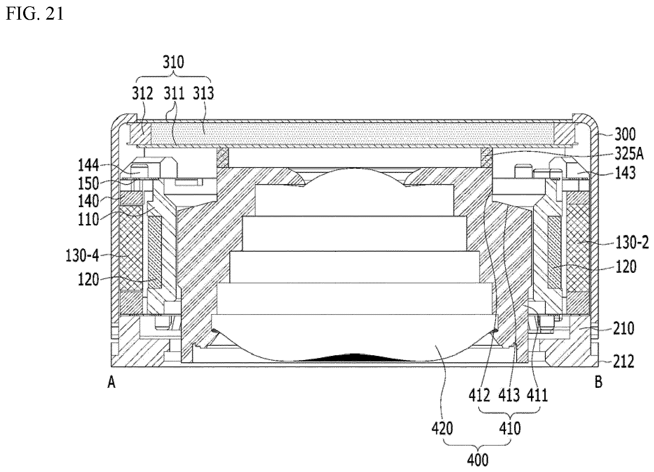

FIG. 20 is an exploded perspective view of a lens module **200-4** according to another embodiment; and FIG. 21 is a cross-sectional view of a lens module **200-4** in a direction AB in FIG. 20.

Referring to FIGS. 20 and 21, FIG. 20 is a modified embodiment of the embodiment illustrated in FIGS. 17 to 19.

In FIGS. 17 to 19, the protruded portion **402,** which is a pressing portion, is formed as a part of the lens barrel **400B** so that the protruded portion **402** and the lens barrel **400B** are integrally formed, but in FIGS. 20 and 21, the protruded portion **402** is not provided in the lens barrel **400,** and the pressing frame **325A** may be provided separately from the lens barrel **400.** The pressurizing frame **325A** may be expressed by replacing it with a "pressing portion" or a "frame".

The pressing frame **325A** may be disposed between the upper surface of the lens barrel **400** and the membranes **311B** and **311** of the first lens part 310, and the membranes **311B** and **311** and liquid **313** can be pressurized by moving the lens barrel **400** together with the bobbin **110A** in an optical axis direction.

For example, the shape of the pressing frame **325A** viewed from above may be a circular shape, an elliptical shape, or a polygonal shape, but is not limited thereto.

The pressing frame **325A** may be disposed between the upper surface of the second part **412** of the lens barrel **410** and the membranes **311B** and **311.**

For example, the lower or lower surface of the pressing frame **325A** may be in contact with, coupled to, or attached to an upper surface of the second portion **412** of the lens barrel **410.**

In addition, for example, the upper or upper surface of the pressing frame **325A** may be in contact with, or coupled to, or attached to the membranes **311B** and **311.**

The description of the protruded portion **402** of FIGS. 17 to 19 may be applied to the pressing frame **325A** or analogously applied.

In another embodiment, the pressing frame may be an example in which the protruded portion **401** of the lens barrel **400A** illustrated in FIGS. 13 to 16 is modified. In this example, the protruded portion **401** of the lens barrel **400A** may be omitted to have the same shape as the lens barrel **400,** a lens barrel **400** and a separate pressing frame may be provided, and the pressing frame may be disposed between the third portion **413** of the lens barrel **400** and the membranes **311A** and **311.** At this time, the description of the protruded portion **401** may be applied to the pressing frame or analogously applied.

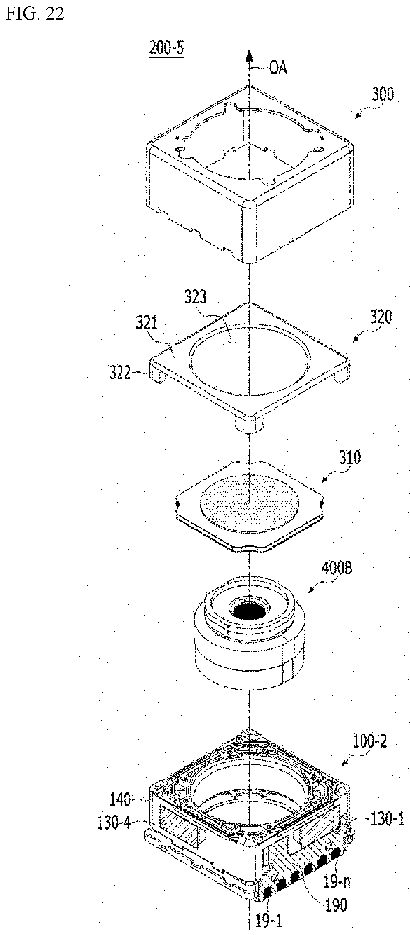

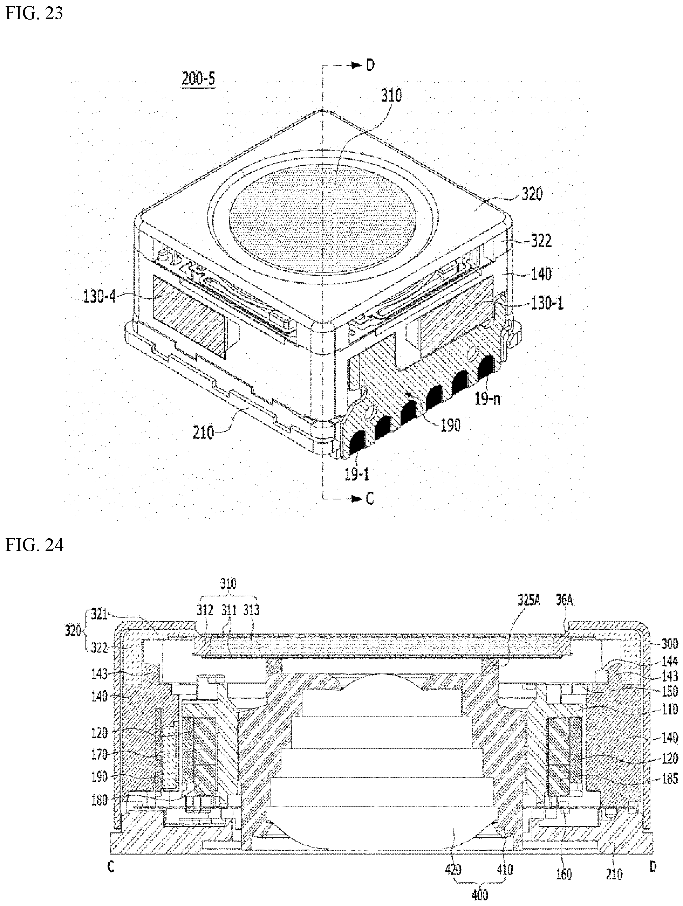

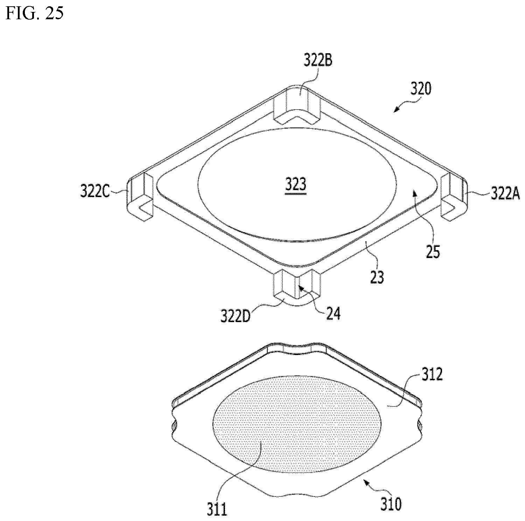

FIG. 22 is an exploded perspective view of a lens module **200-5** according to another embodiment; FIG. 23 is a combined perspective view of a lens module **200-5** in FIG. 22 in which the cover member is omitted; FIG. 24 is a cross-sectional view of a lens module **200-5** in the CD direction in FIG. 23; and FIG. 25 is an exploded perspective view of a holder **320** and a first lens part **310.**

Referring to FIGS. 22 to 25, the lens module **200-5** may comprise a first lens part **310,** a second lens part **400B,** a lens driving device **100-2,** and a holder **320.**

Compared with the lens module **200-3** shown in FIG. 17, the lens module **200-5** may further comprise a holder **320** for accommodating or supporting the first lens part **310.**

The holder **320** is disposed between the first lens part **310** and the cover member **300,** and may accommodate, support, or fix the first lens part **310.** The holder **320** may be expressed by replacing it with a "fixed frame", a "case", or a "housing".

For example, the holder **320** may be disposed on the housing **140.**

The holder **320** may comprise an upper plate **321** and a column portion **322** being extended from the upper plate **321** in an optical axis direction. The column portion **322** may be expressed by replacing it with a "supporting part" or a "protruded portion".

When viewed from above, the upper plate **321** of the holder **320** may have a polygonal (e.g., quadrangular) shape, but is not limited thereto, and may be implemented in various shapes such as a circular shape or an elliptical shape in another embodiment.

In the upper plate **321** of the holder **320,** an opening **323** corresponding to the first lens part **310** may be formed. For example, the opening **323** of the holder **320** may expose the first lens part **310.** For example, the opening **323** of the holder **320** may expose at least a portion of the membrane **311** of the first lens part **310.** For example, the opening **323** may be in the form of a through hole or a hollow penetrating the upper plate **321.**

An inner circumferential surface of the holder **320** formed by the opening **323** may be an inclined surface. For example, the inner angle between the inner circumferential surface of the holder **320** and the upper surface of the holder **320** may be an obtuse angle or a right angle.

For example, in the lower surface **23** of the upper plate **321** of the holder **320,** a groove **25** for placing or accommodating the first lens part **310** may be formed. For example, the groove **25** may comprise a bottom surface and a side surface. The bottom surface of the groove **25** may have a step difference with the lower surface **23** of the upper plate **321** of the holder **320** in an optical axis direction. For example, the groove **25** may be a shape being recessed from the lower surface **23** of the upper plate **321** of the holder **320.** The side surface of the groove **25** may connect the bottom surface of the groove **25** and the lower surface **23** of the upper plate **321** of the holder **320.**

The first lens part **310** may be disposed in the groove **25.** For example, the opening **323** may be formed on the bottom surface of the groove **25.**

The column portion **322** may be extended from a lower surface **23A** of the upper plate **321** toward an upper surface of the housing **140** of the lens driving device **100-2.**

For example, the column portion **322** may be disposed at a corner of the lower surface **23A** of the upper plate **321.** For example, the column portion **322** may comprise four column portions **322A** to **322D** being disposed at four corners of the lower surface of the upper plate **321.**

For example, the column portion **322** may comprise an escape portion **24** for avoiding spatial interference with the stopper of the housing 140. The escape portion **24** may be formed on an inner side surface of the column portion **322,** but is not limited thereto. For example, the escape portion **24** may comprise at least one bent or curved surface, but is not limited thereto. In another embodiment, the escape portion may be in the form of a groove or hole being recessed from an inner side surface or a lower surface of the column portion **322.**

For example, an upper surface of the receptor **312** may be coupled to, attached to, or fixed to a lower surface of the holder **320** by an adhesive. For example, an upper surface of the receptor **312** may be coupled, attached, or fixed to a bottom surface of the groove **25** of the holder **320** by an adhesive.

In another embodiment, at least a portion of the upper surface and/or membrane **311** of the receptor **212** may be coupled to, attached to, or fixed to a lower surface of the holder **320** (or the bottom surface of the groove **25).**

The column portion **322** of the holder **320** may be coupled to the housing **140.** For example, a lower surface of the column portion **322** of the holder **320** and/or an inner side surface of the column portion **322** of the holder **320** may be coupled, attached, or fixed to the upper surface of the housing **140** by an adhesive. For example, an inner side surface of the column portion **322** may be coupled to the stopper **143** of the housing **140** by an adhesive.

For example, the cover member **300** may be formed by press molding or compression molding, and the flatness of the product formed by the press molding is not good compared to the flatness of the product formed by the injection molding. The holder **320** is an injection molding product, and is better than the cover member **300** in terms of flatness. Therefore, compared to the first lens part **310** mounted on the cover member **300,** the flatness of the first lens part **310** mounted on the holder **320** can be enhanced in a direction perpendicular to the optical axis.

The holder **320** of FIGS. 22 to 25 is illustrated as being applied to the first lens part **400B** and the lens driving device **100-2,** but is not limited thereto. The holder **320** may be applied to all the lens modules according to the embodiments described with reference to FIGS. to 21, and FIGS. 22 to 25 may be applied mutatis mutandis.

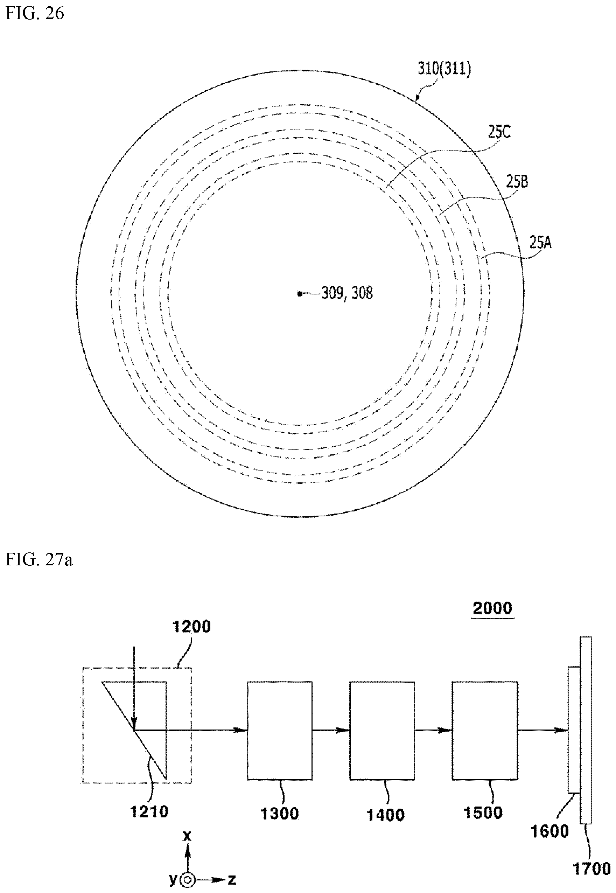

FIG. 26 shows a pressing area of a first lens part **310** pressed by a pressing portion according to a first embodiment of the present invention.

Referring to FIG. 26, the pressurizing region may be a region in which the liquid **313** and/or the membrane **311** are directly pressurized by the pressing portion. For example, the pressing region may be a region in which the pressing portion and the membrane **311** are in direct contact.

When no pressure is applied to the liquid **313** because a driving force is not applied to the liquid **313** by the pressing portion, the membrane **311** may maintain a horizontal plane perpendicular to the optical axis.

When a driving force is applied to the liquid **313** by the pressing portion, and pressure is applied to the liquid **313** and/or the membrane **311,** the shape of the membrane **311** or/and the liquid **313** may be deformed into a curved or curved shape. For example, depending on the degree of the pressure applied by the pressing portion, the curvature of the shape of the membrane **311** or liquid **313** can be changed, and due to this, the focal length of the first lens part **310** can be adjusted.

The first pressing region **25A** may be a region being pressed by the protruded portion **111** (hereinafter referred to as a "first pressing region") of the bobbin **110** illustrated in FIGS. 8a and 8b. In addition, the region being pressed by the pressing frame **325** illustrated in FIGS. 11 and 12 may be the same as the first pressing region **25A.**

The second pressing region **25B** may be a region being pressed by the protruded portion **401** (hereinafter referred to as a "second pressing region") of the lens barrel **400A** illustrated in FIG. 15. In an embodiment in which a pressing frame is provided separately instead of the protruded portion **401,** the pressing region may be the same as the second pressing region **25B.**

The third pressing region **25C** may be a region being pressed by the protruded portion **402** (hereinafter referred to as a "third pressing region") of the lens barrel **400B** illustrated in FIGS. 18 and 19. The region being pressed by the pressing frame **325A** illustrated in FIGS. 20 and 21 may be the same as the third pressing region **25C.**

The diameter of the first pressing region **25A** may be larger than the second pressing region **25B,** and the diameter of the second pressing region **25B** may be larger than the diameter of the third pressing region **25C.** Therefore, the lens size (e.g., the diameter of the lens) of the first lens part **310** being formed by the first pressing region **25A** may be larger than the lens size (e.g., the diameter of a lens) of the first lens part **310** being formed by the second and third pressing regions **25B** and **25C.**

The embodiment may adjust the lens size of the first lens part **310** according to the disposement position of the pressing portion, and in particular, it may be suitable for realizing a large-diameter lens size.

In addition, while the focal length of the second lens part **400, 400A,** and **400B** is adjusted by the lens driving device **100-1** and **100-2,** and at the same time, since the focal length of the first lens part **310** can be adjusted by the pressing portion, the embodiment may finely adjust the focal lengths of the lens modules **200-1** to **200-5** by the first lens part **310.**

Meanwhile, the lens driving device according to the above-described embodiment may be used in various fields, for example, a camera module or an optical device.

FIG. 27a is a conceptual diagram of a camera module **2000** according to a first example not forming part of the present invention.

Referring to FIG. 27a, the camera module **2000** may comprise an optical path conversion unit **1200,** a lens part, an image sensor **1600,** and a circuit board **1700.**

The optical path conversion unit **1200** converts the path of the light being incident in the -x-axis direction into the optical axis direction (or in a direction parallel to the optical axis) (e.g., the z-axis direction) so that it may be emitted toward at least one among the lens units **1300** to **1500.**

As the optical path conversion unit **1200** is disposed, a light entry path through which light travels up to the image sensor **1600** is extended so that a zoom-in/zoom-out function may be performed. To this end, the optical path conversion unit **1200** may comprise a prism **1210** for converting the path of the light incident in the -x-axis direction to the z-axis direction, but the embodiment is not limited thereto. In some cases, the optical path conversion unit **1200** may be omitted.

The lens part may comprise any one among the lens modules **200-1** to **200-5** according to the above-described embodiment.

The lens part may comprise at least one among the lens units **1300** to **1500.** For example, the lens part may comprise a plurality of lens units **1300** to **1500.**

The plurality of lens units **1300** to **1500** may be aligned in the optical axis **OA** direction (or in a direction parallel to the optical axis **OA).**

According to an embodiment, any one of the plurality of lens units **1300** to **1500** may comprise any one of the above-described lens modules **200-1** to **200-5,** and each of the remaining lens units may comprise a fixed lens part. The fixed lens part at this time may be a lens that does not move in the direction of the optical axis.

When the camera module **2000** comprises a plurality of lens units, any one of the above-described lens modules **200-1** to **200-5** is disposed or disposed immediately after the optical path conversion unit **1200,** or an image sensor **1600** may be disposed or disposed immediately before, but is not limited thereto. In another embodiment, any one of the above-described lens modules **200-1** to **200-5** may be disposed between fixed lens parts.

In an embodiment of the lens part comprising the fixed lens part, a separate cover can' (not shown) may be comprised. In addition, a lens unit comprising any one of the lens modules **200-1** to **200-5** may perform an AF function, and any one of the remaining lens units may perform an OIS function.

The image sensor **1600** is disposed on the circuit board **1700.** The image sensor **1600** may perform a function of converting light passing through the lens units **1300** to **1500** into image data. More specifically, the image sensor **1600** converts light into an analog signal through a pixel array comprising a plurality of pixels, and image data may be generated by synthesizing digital signals corresponding to analog signals.

The circuit board **1700** may be electrically connected to the image sensor **1600.** In addition, the circuit board **1700** may be electrically connected to the circuit board 190 of the above-described lens module.

In addition, the camera module **2000** may further comprise a filter being disposed between the lens part and the image sensor.

The filter may serve to block light of a specific frequency band in light passing through the lens units **1300** to **1500** from being incident on the image sensor **1600.** For example, the filter may be an infrared cut filter, but is not limited thereto. At this time, the filter can be placed parallel to the x-y plane. The camera module **2000** may comprise a separate holder for mounting or disposing the filter.

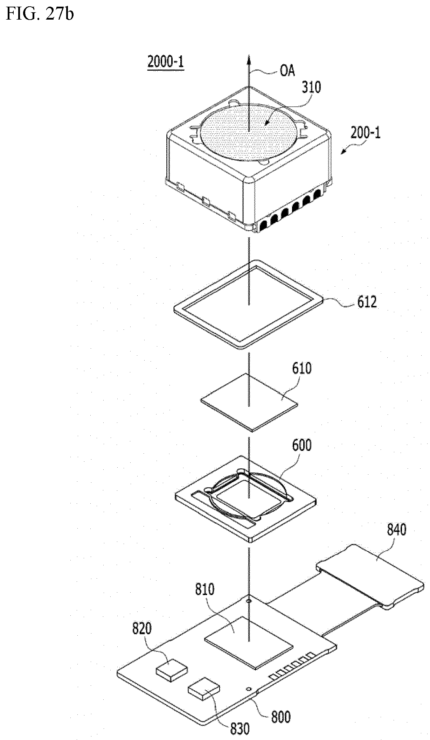

FIG. 27b is an exploded perspective view of a camera module **2000-1** according to another embodiment.

Referring to FIG. 27b, a camera module may comprise: a lens module **200-1;** an adhesive member **612;** a filter **610;** a holder **600;** a circuit board **800;** and an image sensor **810.**

The camera module **2000-1** may comprise at least one among a motion sensor **820,** a control unit **830,** and a connector **840.**

FIG. 27b illustrates the lens module **200-1,** but is not limited thereto, and in another embodiment, the camera module **2000-1** may comprise any one among the other embodiments **200-2** to **200-5** being described above.

The holder **600** may be disposed below the base **210** of the lens driving device **100-1.** The filter **610** may be mounted on the holder **600,** and the holder **600** may comprise a seating part **500** on which the filter **610** is seated. The seating part **500** may be in the form of a protruded portion being protruded from an upper surface of the holder **600** or in the form of a groove being recessed from an upper surface of the holder **600.**

The adhesive member **612** may couple or attach the base **210** of the lens driving device **100-1** to the holder **600.** The adhesive member **710** may serve to prevent foreign substances from being introduced into the lens driving device **100** in addition to the above-described bonding role. For example, the adhesive member **612** may be an epoxy, a thermosetting adhesive, or an ultraviolet curable adhesive.

The filter **610** may serve to block light of a specific frequency band in light passing through the lens barrel **400** from being incident on the image sensor **810.** For example, the filter **610** may be an infrared cut filter, but is not limited thereto. At this time, the filter **610** may be disposed parallel to the x-y plane.

An opening may be formed in the periphery of the holder **600** on which the filter **610** is mounted so that light passing through the filter **610** may be incident on the image sensor **810.**

The circuit board **800** is disposed below the holder **600,** and the image sensor **810** may be mounted on the circuit board **800.** The image sensor **810** is a portion on which the light passing through the filter **610** is incident to form an image comprised in the light.

The circuit board **800** may be provided with various circuits, elements, control units, and the like to convert an image formed on the image sensor **810** into an electrical signal and transmit it to an external device.

A circuit board **800** may be formed with an image sensor, device, and/or a circuit pattern being electrically connected to the control unit, and can be implemented with a circuit board in which various elements are being coupled. The holder **600** may be expressed by replacing it with a "sensor base".

The image sensor **810** receives an image comprised in the light incident through the lens driving device **100,** and the received image may be converted into an electrical signal. The filter **610** and the image sensor **810** may be disposed by being spaced apart to face each other in a first direction.

The motion sensor **820** may be mounted on the circuit board **800,** and may be electrically connected to the control unit **830** through a circuit pattern provided on the circuit board **800.** The motion sensor **820** outputs rotational angular velocity information due to the movement of the camera module **200.** The motion sensor **820** may be implemented with a 2-axis or 3-axis gyro sensor or an angular velocity sensor. In another embodiment, the motion sensor **820** may be omitted.

The control unit **830** may be disposed or mounted on the circuit board **800,** and may be electrically connected to the position sensor **170** and the coil **120** of the lens driving device **100-1.** For example, the circuit board **800** may be electrically connected to the circuit board **190** of the lens driving device **100.**

For example, the control unit **830** may supply a driving signal or power to the coil **120** and/or the position sensor **170.** Or, for example, the control unit **830** may transmit and receive a clock signal and a data signal for data communication (e.g., I2C communication) with the position sensor **170.**

The connector **840** is electrically connected with the circuit board **800** and may comprise a port for electrically being connected with an external device.

In addition, the lens modules **200-1** to **200-5** according to the embodiment may be comprised in an optical instrument for the purpose of: forming an image of an object in space by using the characteristics of light such as reflection, refraction, absorption, interference, and diffraction; enhancing the visual acuity of the eyes; recording and reproducing an image by the lens; and optical measurement, image propagation and transmission, or the like. For example, the optical device according to the embodiment may be cell phones, mobile phones, smart phones, portable smart devices, digital cameras, laptop computers, digital broadcasting terminals, personal digital assistants (PDAs), portable multimedia players (PMPs), navigations, and the like, but is not limited thereto, and any device for photographing images or photos is possible.

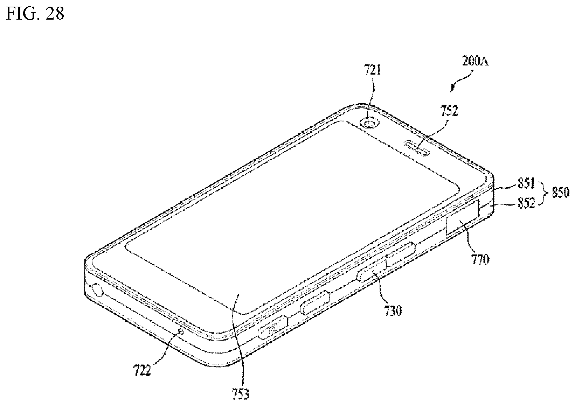

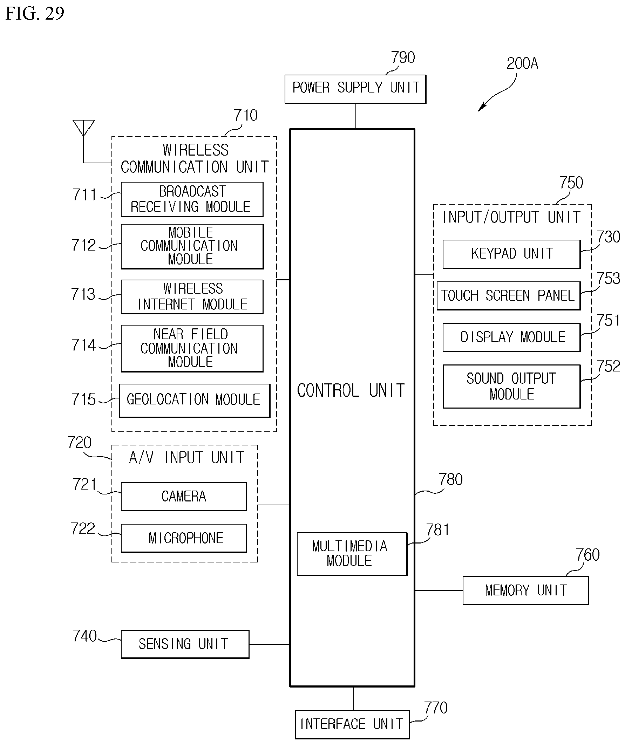

FIG. 28 is a perspective view of a portable terminal **200A** according to a first example not forming part of the present invention; and FIG. 29 is a block diagram of the portable terminal **200A** illustrated in FIG. 28.

Referring to FIGS. 28 and 29, the portable terminal **200A** (hereinafter referred to as "terminal") may comprise a body **850,** a wireless communication unit **710,** an A/V input unit **720,** a sensing unit **740,** and input/output unit **750,** a memory unit **760,** an interface unit **770,** a control unit **780,** and a power supply unit **790.**

The body **850** illustrated in FIG. 28 is in the form of a bar, but is not limited thereto, and may have various structures such as a slide type, a folder type, a swing type, a swirl type, and the like, in which two or more sub-bodies are combined so that they can move relative to each other.

The body **850** may comprise a case (casing, housing, and cover) forming an outer appearance. For example, the body **850** may comprise a front case **851** and a rear case **852.** Various electronic components of the terminal may be embedded in a space formed between the front case **851** and the rear case **852.**

The wireless communication unit **710** may comprise one or more modules that enable wireless communication between the terminal **200A** and the wireless communication system or between the terminal **200A** and the network in which the terminal **200A** is located. For example, the wireless communication unit **710** may comprise any one or more among a broadcast receiving module **711,** a mobile communication module **712,** a wireless Internet module **713,** a near field communication module **714,** and a location information module **715.**

The A/V (Audio/Video) input unit **720** is for inputting an audio signal or a video signal, and may comprise a camera **721** and a microphone **722** and the like.

The camera **721** may comprise the lens modules **200-1** to **200-5** or the camera module **2000** according to an embodiment.

The sensing unit **740** may generate a sensing signal for controlling the operation of the terminal **200A** by detecting the current state of the optical device such as open/close state of the terminal **200A,** location of the terminal **200A,** user contact, orientation of the terminal **200A,** and acceleration and deceleration of the terminal **200A.** For example, when the terminal **200A** is in the form of a slide phone, it is possible to detect whether the slide phone is opened or closed. In addition, it may be responsible for sensing functions related to whether the power supply unit **790** is supplied with power, whether the interface unit **770** is coupled to an external device, and the like.

The input/output unit **750** may be configured to generate an input or output related to visual, auditory, or tactile sense. The input/output unit **750** may generate input data for controlling the operation of the terminal **200A,** and may output information processed by the terminal **200A.**

The input/output unit **750** may comprise a keypad unit **730,** a display module **751,** a sound output module **752,** and a touch screen panel **753.** The keypad unit **730** may generate input data in response to a keypad input.

The display module **751** may comprise a plurality of pixels whose color changes according to an electrical signal. For example, the display module **751** may comprise at least one among a liquid crystal display, a thin film transistor-liquid crystal display, an organic light-emitting diode, a flexible display, and a 3D display.

The sound output module **752** outputs audio data being received from the wireless communication unit **710** in a call signal reception, a call mode, a recording mode, a voice recognition mode, or a broadcast receiving mode, or audio data stored in the memory unit **760,** and the like.

The touch screen panel **753** may convert a change in capacitance generated due to a user's touch on a specific area of the touch screen into an electrical input signal.

The memory unit **760** may store a program for processing and control of the control unit **780,** and input/output data (e.g., phone book, message, audio, still image, photo, video, and the like) can be temporarily stored. For example, the memory unit **760** may store an image photographed by the camera **721,** for example, a photo or a video.

The interface unit **770** serves as a path for connecting to an external device connected to the terminal **200A.** The interface unit **770** may receive data from an external device, receive power and transmit it to each component inside the terminal **200A,** or transmit data inside the terminal **200A** to an external device. For example, the interface unit **770** may comprise: a wired/wireless headset port; an external charger port, a wired/wireless data port; a memory card port; a port for connecting a device equipped with an identification module; an audio input/output (I/O) port; a video input/output (I/O) port; an earphone port, and the like.

The control unit **780** may control the overall operation of the terminal **200A.** For example, the control unit **780** may perform related control and processing for voice call, data communication, video call, and the like.

The control unit **780** may comprise a multimedia module **781** for playing multimedia. The multimedia module **781** may be implemented inside the control unit **180** or may be implemented separately from the control unit **780.**

The control unit **780** may perform a pattern recognition process capable of recognizing a handwriting input or a drawing input performed on the touch screen as characters and images, respectively.

The power supply unit **790** may receive external power or internal power by the control of the control unit **780** to supply power required for operation of each component.

An optical device according to a first embodiment of the present invention will be described.

The optical device may comprise any one among a cell phone, a mobile phone, a smart phone, a portable smart device, a digital camera, a laptop computer, a digital broadcasting terminal, a personal digital assistant (PDA), a portable multimedia player (PMP), navigation. However, the type of optical device is not limited thereto, and any device for taking an image or picture may be comprised in the optical device.

The optical device may comprise a main body. The main body may be in the form of a bar. Or, the main body may have various structures such as a slide type, a folder type, a swing type, and a swivel type, in which two or more sub-bodies are coupled to be movable relative to each other. The main body may comprise a case (casing, housing, and cover) forming an outer appearance. For example, the main body may comprise a front case and a rear case. Various electronic components of the optical device may be embedded in a space formed between the front case and the rear case.

The optical device may comprise a display. The display may be disposed on one surface of the main body of the optical device. The display may output an image. The display may output an image photographed by the camera.

The optical device may comprise a camera. The camera may comprise a time of flight (ToF) camera device. The ToF camera device may be disposed in front of the main body of the optical device. In this case, the ToF camera device can be used for various types of biometric recognition, such as a user's face recognition and iris recognition for security authentication of the optical device.

The ToF camera device may comprise a light emitting module and a light receiving module.

The ToF camera device may comprise a light emitting module. The light emitting module may be a light emitting part, a light emitting unit, a light emitting assembly, or a light emitting device. The light emitting module may generate an output light signal and then irradiate it to the subject. At this time, the light emitting module can generate and output an output light signal in the form of a pulse wave or a continuous wave. The continuous wave may be in the form of a sinusoidal wave or a square wave. By generating the output light signal in the form of a pulse wave or a continuous wave, the ToF camera device can detect the phase difference between the output light signal outputted from the light emitting module and the input light signal inputted to the light receiving module of the ToF camera device after being reflected from the subject. In the present specification, the output light refers to the light outputted from the light emitting module and incident on the subject; and the input light refers to the light that is outputted from the light emitting module, reaches the subject, is reflected from the subject, and then is inputted to the camera device. From the viewpoint of the subject, the output light may be incident light, and the input light may be reflected light.

The light emitting module irradiates the generated output light signal to the subject for a predetermined exposure period (integration time). Here, the exposure period means one frame period. In the case of generating a plurality of frames, the preset exposure cycle is repeated. For example, when the ToF camera device photographs a subject at 20 FPS, the exposure period is 1/20 sec. And when 100 frames are generated, the exposure period may be repeated 100 times.

The light emitting module may generate a plurality of output light signals having different frequencies. The light emitting module may sequentially and repeatedly generate a plurality of output light signals having different frequencies. Or, the light emitting module may simultaneously generate a plurality of output light signals having different frequencies.

The light emitting module may comprise a light source. A light source may generate light. The light source may output light. The light source may irradiate light. The light generated by the light source may be infrared rays having a wavelength of 770 to 3000 nm. Or, the light generated by the light source may be visible light having a wavelength of 380 to 770 nm. The light source may comprise a light emitting diode (LED). The light source may comprise a plurality of light emitting diodes disposed according to a predetermined pattern. In addition, the light source may comprise an organic light emitting diode (OLED) or a laser diode (LD).

The light emitting module may comprise a light modulation unit for modulating light. The light source may generate an output light signal in the form of a pulse wave or a continuous wave by repeating on/off at regular time intervals. The predetermined time interval may be the frequency of the output light signal. The on/off of the light source may be controlled by the light modulation unit. The light modulation unit may control the on/off of the light source so that the light source generates an output light signal in the form of a continuous wave or a pulse wave. The light modulation unit may control the light source to generate an output light signal in the form of a continuous wave or a pulse wave through frequency modulation, pulse modulation, or the like.

The light emitting module may comprise a diffuser. The diffuser may be a diffuser lens. The diffuser may be disposed in front of the light source. The light emitted from the light source may pass through the diffuser and be incident on the subject. The diffuser may change the path of light emitted from the light source. The diffuser may condense the light emitted from the light source.

The ToF camera device may comprise a light receiving module. The light receiving module may be a light receiving part, a light receiving unit, a light receiving assembly, or a light receiving device. The light receiving module may detect light emitted from the light emitting module and reflected from the subject. The light receiving module may generate an input light signal corresponding to an output light signal outputted from the light emitting module. The light receiving module may be disposed side by side with the light emitting module. The light receiving module may be disposed next to the light emitting module. The light receiving module may be disposed in the same direction as the light emitting module.

The light receiving module may comprise the camera device according to the second embodiment of the present invention.

Hereinafter, a configuration of a camera device according to a first embodiment of the present invention will be described with reference to the drawings.

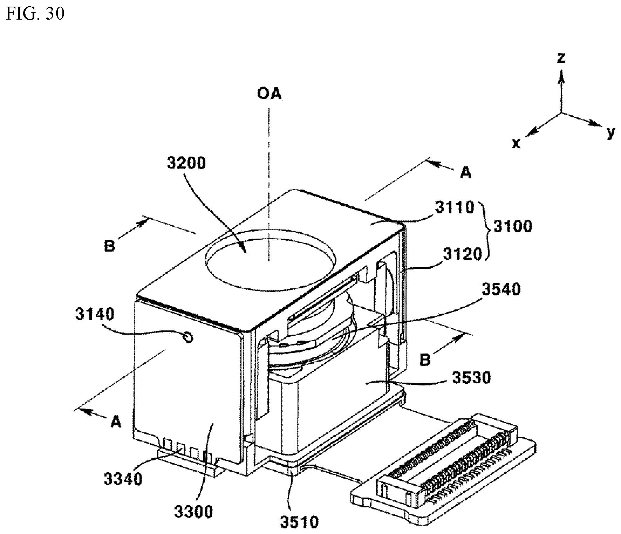

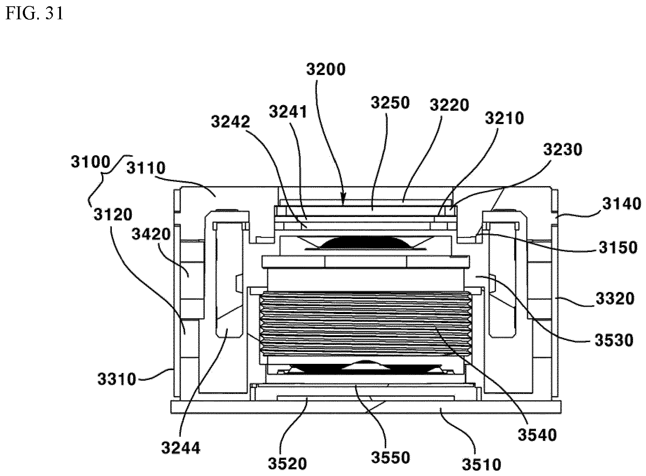

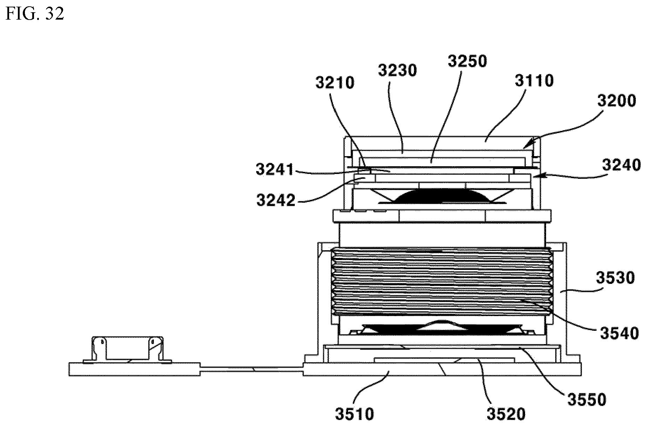

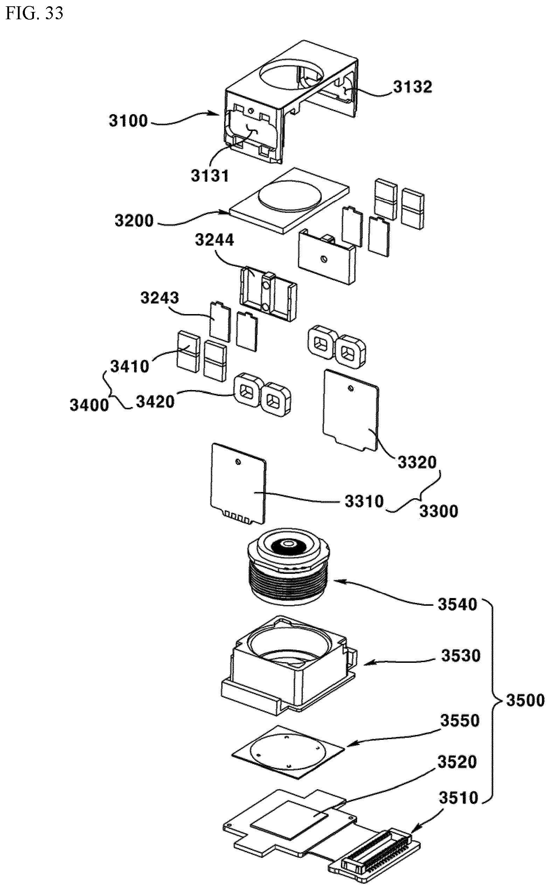

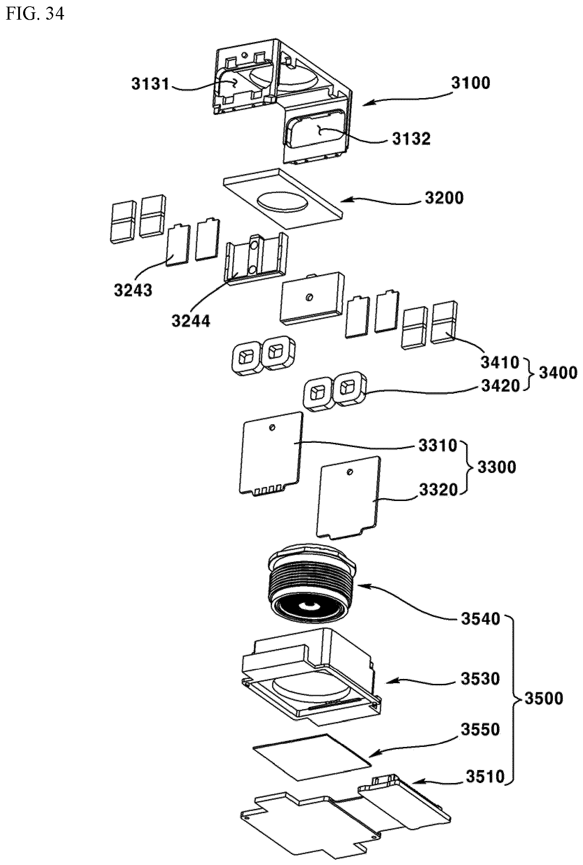

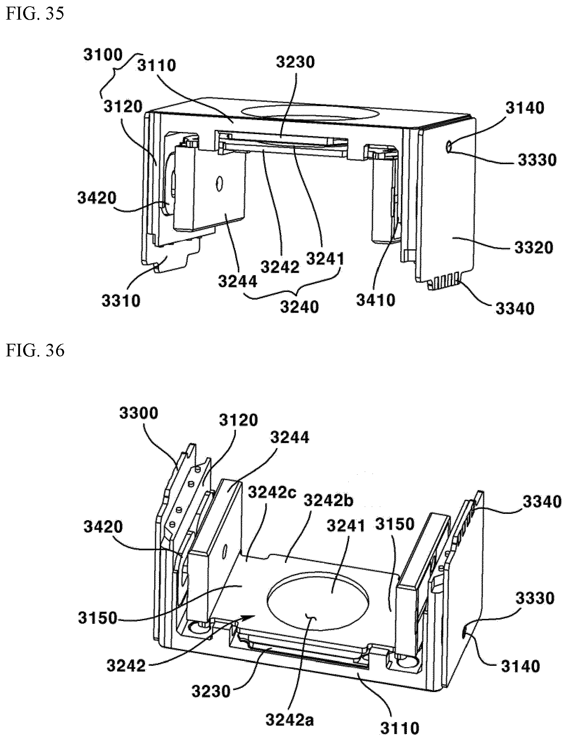

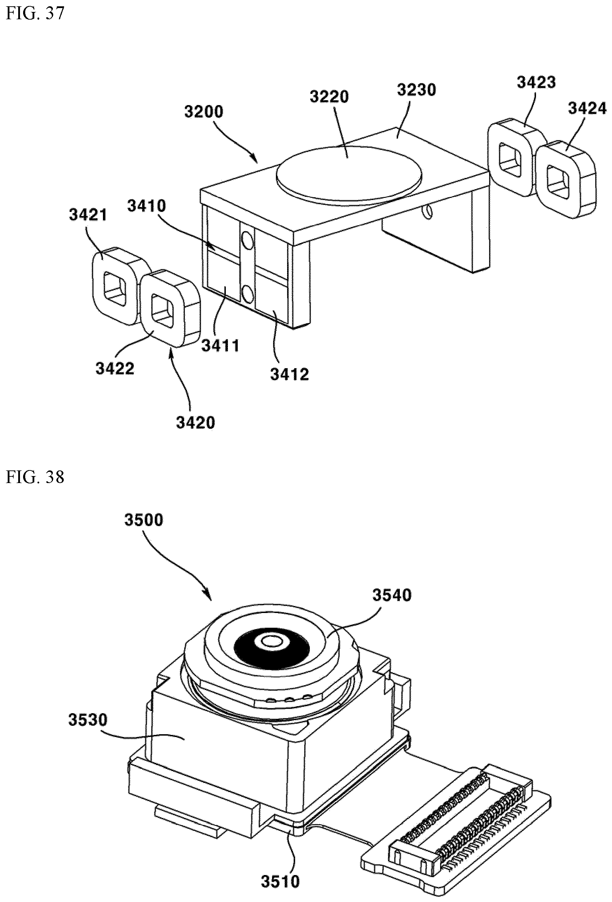

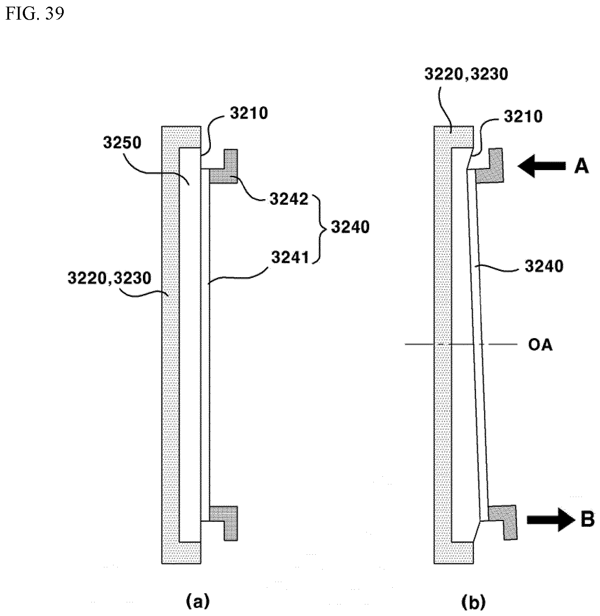

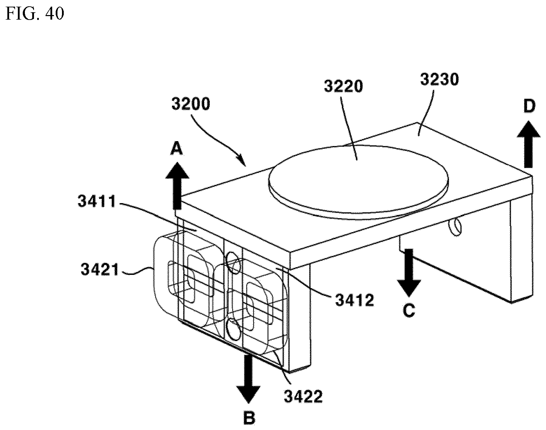

FIG. 30 is a perspective view of a camera device according to a first embodiment of the present invention; FIG. 31 is a cross-sectional view taken along line A-A in FIG. 30; FIG. 32 is a cross-sectional view taken along line B-B in FIG. 30; FIG. 33 is an exploded perspective view of a camera device according to a first embodiment of the present invention; FIG. 34 is an exploded perspective view of a camera device according to a first embodiment of the present invention, as viewed from a different direction from FIG. 33; FIG. 35 is a perspective view of a partial configuration of a camera device according to a first embodiment of the present invention; FIG. 36 is a perspective view of a part of a camera device in FIG. 35 viewed from another direction; FIG. 37 is a perspective view illustrating a liquid lens and a driving unit according to a first embodiment of the present invention; FIG. 38 is a perspective view of a camera module according to a first embodiment of the present invention; FIG. 39 is a conceptual diagram for explaining the concept of driving a liquid lens according to a first embodiment of the present invention; and FIG. 40 is a view for explaining a method of driving a liquid lens according to a first embodiment of the present invention.

The camera device may comprise a holder **3100.** The holder **3100** may be disposed on the printed circuit board **3510.** The holder **3100** may be fixed on the printed circuit board **3510.** The holder **3100** may be disposed on the base **3530.** The holder **3100** may cover at least a portion of the camera module **3500.** A liquid lens **3200** may be disposed inside the holder **3100.** A coil **3420** may be disposed in the holder **3100.** The holder **3100** may be formed of an insulating material.

The holder **3100** may comprise an upper plate **3110.** A printed circuit board **3510** may be disposed in parallel in the upper plate **3110.** A liquid lens **3200** may be coupled to the upper plate **3110.** The upper plate **3110** may comprise a hole through which light passes.

The holder **3100** may comprise a side plate **3120.** The side plate **3120** may be extended from the upper plate **3110.** The side plate **3120** may be extended downward from an edge of the upper plate **3110.** The side plate **3120** may be vertically disposed on the upper plate **3110.** The side plate **3120** may be integrally formed with the upper plate **3110.** A coil **3420** may be disposed on the side plate **3120.**

The side plate **3120** of the holder **3100** may comprise a plurality of side plates. The side plate **3120** may comprise two side plates. The side plate **3120** of the holder **3100** may comprise a first side plate and a second side plate being disposed opposite to the first side plate.

The holder **3100** may comprise a hole being formed in the side plate **3120.** A coil **3420** may be accommodated in the hole. The hole of the holder **3100** may comprise a first hole **3131** being formed in the first side plate and a second hole **3132** formed in the second side plate.

The holder **3100** may comprise a protrusion **3140.** The protrusion **3140** may be protruded from an outer surface of the side plate **3120** of the holder **3100.** The protrusion **3140** may be inserted into the hole **3330** of the substrate **3300.** The protrusion **3140** may be coupled to the substrate **3300.** The substrate **3300** may be coupled in place by the protrusion **3140.** In other words, the protrusion **3140** functions as an assembly guide for the substrate **3300** and can enhance the fixing force of the substrate **3300** to the holder **3100** after the substrate **3300** is assembled.

The camera device may comprise a cover. The cover may cover the holder **3100.** The cover may cover the holder **3100** to form an outer appearance of the camera device. The cover may comprise an upper plate and a side plate. The cover may be formed of metal.

The camera device may comprise a variable focus lens. The variable focus lens may comprise a liquid lens **3200.** The liquid lens **3200** may be disposed on the upper plate **3110** of the holder **3100.** The liquid lens **3200** may be disposed at a position corresponding to the lens **3540.** The liquid lens **3200** may comprise a lens surface whose curvature is changed by the driving unit **3400.** At least a part of the liquid lens **3200** may be changed by the driving unit **3400.** In addition, the driving unit **3400** may be understood as one component of the liquid lens **3200.** That is, the liquid lens **3200** may be described as comprising a magnet **3410** and a coil **3420.**

The liquid lens **3200** may comprise a membrane **3210.** The membrane **3210** may comprise a film. The membrane **3210** may have flexibility. The membrane **3210** may be deformed to have curvature. The membrane **3210** may be transparent. The membrane **3210** may have elasticity. When the membrane **3210** is pressed by the lens forming member **3240,** the shape changes and may be restored when the pressing of the lens forming member **3240** is completed. The membrane **3210** may be elastically extended. The membrane **3210** serves to confine the liquid **3250** together with the optical member **3220** in the cavity. The upper surface of the membrane **3210** may be in contact with a lower surface of the liquid **3250.** The membrane **3210** may be disposed on a path through which light passes. The membrane **3210** may have light transmittance. The membrane **3210** may have a circular bottom shape. In a modified embodiment, the membrane **3210** may have an elliptical shape or a polygonal shape bottom surface.

The membrane **3210** may be a transparent elastic optical membrane. Specifically, the membrane **3210** may have high elastic properties and may be chemically stable. For example, the membrane **3210** may be a polydimethyl siloxane (PDMS) elastomer, a poly methyl phenyl siloxane (PMPS) elastomer, a fluorosilicone elastomer, or a poly ether elastomer, or propylene oxide elastomer, polyester elastomer, and the like.

When the membrane **3210** does not have elasticity or has elasticity but does not have enough elasticity to restore the tilted lens surface to the original horizontal surface, the liquid lens **3200** may further comprise an upper side elastic member (not shown). The upper side elastic member may be disposed between the membrane **3210** and the lens forming member **3240.** In this case, after the lens surface is tilted by the first or second tilting surface, the tilted lens surface may be restored to the horizontal surface by the upper side elastic member.

The liquid lens **3200** may comprise an optical member **3220.** The optical member **3220** may face the membrane **3210.** The optical member **3220** may accommodate the liquid **3250.** The optical member **3220** may be positioned on a path through which light passes. The optical member **3220** may be formed of a material having light transmittance. The optical member **3220** may comprise a cavity in which the liquid **3250** may be accommodated. The cavity may have a circular bottom shape. As a modified embodiment, the cavity may have an elliptical shape or a polygonal bottom shape. The optical member **3220** may be formed of a non-flexible member.

The liquid lens **3200** may comprise a wall body **3230.** The wall body **3230** may form a cavity therein by connecting the membrane **3210** and the optical member **3220.** The wall body **3230** may be formed of a non-transmittance material. The wall body **3230** may accommodate the liquid **3250** therein. The wall body **3230** may be disposed between the optical member **3220** and the membrane **3210.** The wall body **3230** may be formed of a non-flexible member.

In a first embodiment of the present invention, the optical member **3220** and the wall body **3230** may be integrally formed. At this time, the optical member **3220** and the wall body **3230** may be referred to as a body. The body may form a cavity with the membrane **3210** therebetween. A liquid **3250** may be disposed in the cavity. That is, the liquid **3250** may be disposed between the membrane **3210** and the body.

The liquid lens **3200** may comprise a lens forming member **3240.** The lens forming member **3240** may be in contact with the membrane **3210.** The lens forming member **3240** may adjust the curvature of the region of the membrane **3210** facing the optical member **3220.** The lens forming member **3240** may deliver the driving force being applied from the driving unit **3400** to the membrane **3210.**

When no driving force is applied to the liquid **3250** and no pressure is applied to the liquid **3250,** the lens surface of the membrane **3210** is positioned on a horizontal plane. However, when the driving force of the driving unit **3400** is applied to the membrane **3210** by the lens forming member **3240** and pressure is applied to the pressing region of the liquid **3250,** the liquid **3250** flows and the lens of the membrane **3210** is applied. The face can be tilted to either side. In a second embodiment of the present invention, the shape of the lens surface of the membrane **3210,** that is, the curvature of the lens surface may be changed or the lens surface may be tilted by the pressure from the liquid **3250.**

According to a first embodiment of the present invention, the optical path can be changed by tilting the lens surface of the liquid lens **3200** through the voice coil motor (VCM) structure of the magnet and the coil. In a first embodiment of the present invention, when a force for pressing one side of the lens forming member **3240** (refer to **A** in FIG. 39) is generated, the corresponding portion of the membrane **3210** may be pressed. In addition, when a force (**B** in FIG. 39) that pulls the other side of the lens forming member **3240** is generated, the corresponding portion of the membrane **3210** may be protruded.

For example, an upward force (refer to **A** in FIG. 40) is generated on the first magnet **3411** by the first coil **3421** and the first magnet **3411,** a downward force (refer to **B** in FIG. 40) is generated on the second magnet **3412** by the second coil **3422** and the second magnet **3412,** a downward force (refer to **C** in FIG. 40) is generated on the third magnet **3413** by the third coil **3423** and the third magnet **3413,** and an upward force (refer to **D** in FIG. 40) may be generated in the fourth magnet **3414** by the fourth coil **3424** and the fourth magnet **3414.**

The lens forming member **3240** may comprise a window **3241.** The window **3241** may pressurize the membrane **3210.** The window **3241** may be in contact with a lower surface of the membrane **3210.** The window **3241** may be fixed to the membrane **3210** and move integrally with the membrane **3210** as illustrated in FIG. 39. The window **3241** may be formed of a transparent material.

The lens forming member **3240** may comprise a frame **3242.** The frame **3242** may be coupled to window **3241.** The frame **3242** may deliver the driving force of the driving unit **3400** to the window **3241.** A magnet **3410** may be coupled to the frame **3242.**

The lens forming member **3240** may comprise a yoke **3243.** The yoke **3243** may be disposed on one surface of the magnet **3410.** In more detail, the yoke **3243** may be disposed on an opposite surface of the side surface of the magnet **3410** facing the coil **3420.** The yoke **3243** may be disposed between the magnet **3410** and the housing **3244.** As a modified embodiment, the yoke **3243** may be provided in a configuration separate from the lens forming member **3240.**

The lens forming member **3240** may comprise a housing **3244.** The housing **3244** may accommodate a magnet **3410.** The housing **3244** may be formed in a shape corresponding to the magnet **3410.** The housing **3244** may be coupled to the frame **3242.**

The liquid lens **3200** may comprise a liquid **3250.** The liquid **3250** may be disposed in the cavity. The liquid **3250** may be a liquid. The liquid **3250** may be transparent. The liquid **3250** may be non-volatile. The liquid **3250** may have chemical stability. For example, the liquid **3250** may be silicone oil or a silicone liquid. In addition, the liquid **3250** may comprise any one or more among a transparent hydrocarbon-based oil, an ester oil, an ether-based oil, and a perfluorinated polyether oil.

The liquid **3250** may have a low viscosity and thus may have excellent mobility. The viscosity of liquid **3250** may affect the flow rate of liquid **3250.** If the flow rate is slow, the liquid **3250** may have a slow reaction rate to the driving force applied from the driving unit **3400** and it may be difficult to precisely control the flow. Specifically, even when a driving force is applied to the liquid **3250,** as the viscosity of the liquid **3250** increases, the time required for the liquid **3250** to deform the lens surface of the membrane **3210,** that is, the response time may increase. Here, the lens surface may be a lower surface or an upper surface of the membrane **3210.** If the viscosity of the liquid **3250** is high, an overshooting phenomenon that deforms more than the actual applied pressure may occur.

The pressing region of the liquid **3250** may be located at the edge of the liquid **3250.** The pressing region may comprise first to fourth pressing regions. Based on the optical axis **OA,** the first to fourth pressing regions may be spaced apart from each other at equal intervals or may be spaced apart from each other at different intervals.

At least one of: the angle formed by a first line segment connecting an optical axis **OA** and any one point (e.g., the center) of the first pressing region, and a second line segment connecting an optical axis **OA** and any one point (e.g., the center) of a second pressing region (hereinafter referred to as a 'first angle'); the angle formed by a third line segment and a second line segment connecting an optical axis **OA** and any one point (e.g., the center) of the third pressing region (hereinafter referred to as a 'second angle'); the angle formed by a fourth line segment and a third line segment connecting an optical axis **OA** and any one point (e.g., the center) of a fourth pressing region (hereinafter referred to as a 'third angle'); or the angle formed by the fourth line segment and the first line segment (hereinafter referred to as a 'fourth angle') may be different. Or, the first to fourth angles may be all the same as 90°.

When the driving force is applied to the third pressing region, the lens surface of the membrane **3210** may be inclined from the horizontal plane in the form of a first tilting surface, and when the driving force is applied to the fourth pressing region, the lens surface of the membrane **3210** may be inclined from the horizontal plane in the form of a second tilting surface. In this way, the OIS function may be performed as the lens surface of the membrane **3210** is inclined in the form of the first or second tilting surface. The OIS function performed by the small camera module of a mobile device such as a smartphone or tablet PC may refer to a function being performed to prevent the outline of the photographed image from not being clearly formed due to the vibration caused by the user's hand-shake when photographing a still image.

In a first embodiment of the present invention, the curvature of the membrane **3210** may be adjusted by the interaction between the coil **3420** and the magnet **3410.** Through this, the liquid lens **3200** acquires an image moved by a distance of 0.25 times the pixel size in a first direction, acquires an image moved by a distance of 0.25 times the pixel size in the second direction perpendicular to a first direction, acquires an image moved by a distance of 0.25 times the pixel size in a third direction opposite to the first direction, and may acquire an image moved by a distance of 0.25 times the pixel size in a fourth direction opposite to the second direction. At this time, the first to fourth directions may be diagonal directions of the pixel.

As a modified embodiment, the liquid lens **3200** acquires an image moved by a distance of 0.5 times the pixel size in a first direction, acquires an image moved by a distance of 0.5 times the pixel size in a second direction perpendicular to the first direction, acquires an image moved by a distance of 0.5 times the pixel size in a third direction opposite to the first direction, and may acquire an image moved by a distance of 0.5 times the pixel size in a fourth direction opposite to the second direction. At this time, the first to fourth directions may be directions toward four lateral sides of the pixel. That is, each of the first to fourth directions may be perpendicular to the side of the pixel.

The camera device may comprise a substrate **3300.** The substrate **3300** may be disposed on a side plate **3120** of the holder **3100.** The substrate **3300** may comprise a flexible printed circuit board (FPCB). The substrate **3300** may electrically connect the coil **3420** and the printed circuit board **3510.** The substrate **3300** may be formed in a shape corresponding to the side plate **3120** of the holder **3100.**

The substrate **3300** may comprise a plurality of substrates. The substrate **3300** may comprise two substrates. The substrate **3300** may comprise a first substrate **3310** disposed on a first side plate of the holder **3100** and a second substrate **3320** disposed on a second side plate of the holder **3100.**

The substrate **3300** may comprise a hole **3330.** The hole **3330** may comprise a hole **3330** into which the protrusion **3140** of the holder **3100** is inserted. The hole **3330** may be formed in a size corresponding to a position corresponding to the protrusion **3140** of the holder **3100.**

The substrate **3300** may comprise a terminal **3340.** The terminal **3340** may be disposed at a lower end of the substrate **3300.** The terminal **3340** of the substrate **3300** may be coupled to the printed circuit board **3510.** The terminals **3340** of the substrate **3300** may be coupled to the printed circuit board **3510** by solder balls or conductive epoxy. The terminal **3340** may comprise a plurality of terminals. The number of terminals **3340** may correspond to the number of conductive lines required for the coil **3420.**

The camera device may comprise a driving unit **3400.** The driving unit **3400** may change the curvature of the lens surface of the liquid lens **3200.** The driving unit **3400** may comprise a magnet **3410** and a coil **3420.** The driving unit **3400** may generate a driving force through electromagnetic force. Hereinafter, an embodiment in which the magnet **3410** is fixed to the liquid lens **3200** and the coil **3420** is fixed to the holder **3100** will be described, but in a modified embodiment, the magnet **3410** is fixed to the holder **3100** and the coil **3420** may be fixed to the liquid lens **3200.**

The driving unit **3400** may comprise a magnet **3410.** The magnet **3410** may be coupled to the liquid lens **3200.** The magnet **3410** may be disposed on the liquid lens **3200.** The magnet **3410** may be disposed on the frame **3242.** The magnet **3410** may be disposed on the yoke **3243.** The magnet **3410** may be disposed between the yoke **3243** and the coil **3420.** The magnet **3410** may be disposed between the leg portion **3242c** of the frame **3242** and the housing **3244.**

The magnet **3410** may comprise a plurality of magnets. The magnet **3410** may comprise four magnets. The magnet **3410** comprises : a first magnet **3411** being disposed on the lens forming member **3240** and facing the first coil **3421;** a second magnet **3412** being disposed on the lens forming member **3240** and facing the second coil **3422;** a third magnet **3413** being disposed on the lens forming member **3240** and facing the third coil **3423;** and a fourth magnet **3414** being disposed on the lens forming member **3240** and facing the fourth coil **3424.**

An angle formed by the virtual line connecting the first magnet **3411** and the fourth magnet **3414** and the virtual line connecting the second magnet **3412** and the third magnet **3413** may not be a right angle.

The first and second magnets **3411** and **412** are disposed on one side of the lens forming member **3240,** and the third and fourth magnets **3413** and **414** are disposed on the other side of the lens forming member **3240.** The outer side surface of the first magnet **3411** and the outer side surface of the second magnet **3412** face the same direction, and the outer side surface of the third magnet **3413** and the outer side surface of the fourth magnet **3414** may face the same direction. The outer side surface of the first magnet **3411** and the outer side surface of the second magnet **3412** are disposed on the same plane, and the outer side surface of the third magnet **3413** and the outer side surface of the fourth magnet **3414** may be disposed on the same plane.

The magnet **3410** may be disposed on the lens forming member **3240** side. The magnet **3410** may be directly coupled to the lens forming member **3240.** Or, the magnet **3410** may be indirectly coupled to the lens forming member **3240** in a state being coupled to another member.

The upper portion of the first magnet **3411** has an N-pole polarity, the lower portion of the first magnet **3411** has an S-pole polarity, the upper portion of the second magnet **3412** has an S-pole polarity, and the lower portion of the second magnet **3412** has an N-pole polarity. The upper portion of the third magnet **3413** has an N-pole polarity, the lower part of the third magnet **3413** has an S-pole polarity, the upper portion of the fourth magnet **3414** has an S-pole polarity, and the lower portion of the fourth magnet **3414** has an N-pole polarity. As a modified embodiment, the upper portion of the third magnet **3413** has an S-pole polarity, the lower portion of the third magnet **3413** has an N-pole polarity, the upper portion of the fourth magnet **3414** has an N-pole polarity, and the lower portion of the fourth magnet **3414** may have an S-pole polarity.

The driving unit **3400** may comprise a coil **3420.** The coil **3420** may be coupled to the substrate **3300.** The coil **3420** may face the magnet **3410.** The coil **3420** may be disposed to face the magnet **3410.** The coil **3420** may electromagnetically interact with the magnet **3410.** In this case, when a current is supplied to the coil **3420** and an electromagnetic field is formed around the coil **3420,** the magnet **3410** can move against the coil **3420** by electromagnetic interaction between the coil **3420** and the magnet **3410.** The coil **3420** may be coupled to an inner surface of the substrate **3300.** The coil **3420** may be disposed in a hole of the side plate **3120** of the holder **3100.** The coil **3420** and the magnet **3410** may be disposed at positions opposite to each other.

The coil **3420** may comprise a pair of ends (lead wires) for supplying power. At this time, the first end of the coil **3420** may be drawn out upward direction of the coil **3420** and the second end of the coil **3420** may be drawn out downward direction of the coil **3420.** The coil **3420** may comprise a first end and a second end being coupled to the substrate **3300.** The coil **3420** may be coupled to the substrate **3300** through a solder. The coil **3420** may be mounted on the substrate **3300** using SMT.

A current generating a Lorentz force may flow in one direction in the coil **3420.** A current may flow in the forward direction in the coil **3420.** Meanwhile, current may flow in the coil **3420** in the other direction opposite to the one direction. That is, current may flow in the reverse direction in the coil **3420.**

The coil **3420** may comprise a plurality of coils. The coil **3420** may comprise four coils. The coil **3420** may comprise first to fourth coils **3421, 422, 423,** and **424.** Currents may be independently applied to the first to fourth coils **3421, 422, 423,** and **424.** Currents may be individually applied to the first to fourth coils **3421, 422, 423,** and **424,** respectively. The first to fourth coils **3421, 422, 423,** and **424** may be electrically separated. The coil **3420** may comprise a first coil **3421** facing the first magnet **3411,** a second coil **3422** facing the second magnet **3412,** and a third coil **3423** facing the third magnet **3413,** and a fourth coil **3424** facing the fourth magnet **3414.** The first to fourth coils **3421, 422, 423,** and **424** may be coupled to the holder **3100.**

The coil **3420** comprises a first coil **3421** and a second coil **3422** being disposed on the first substrate **3310,** and a third coil **3423** and a fourth coil **3424** being disposed on the second substrate **3320.** The first coil **3421** and the second coil **3422** may be disposed in the first hole **3131** of the holder **3100.** The third coil **3423** and the fourth coil **3424** may be disposed in the second hole **3132** of the holder **3100.**

In the second embodiment of the present invention, four coils can be controlled by two channels. The first coil **3421** and the second coil **3422** may be electrically connected. However, the direction of the Lorentz force generated between the first coil **3421** and the first magnet **3411** and the direction of the Lorentz force generated between the second coil **3422** and the second magnet **3412** may be opposite. For example, the first coil **3421** and the second coil **3422** may be disposed such that currents in opposite directions flow. Or, the first coil **3421** and the second coil **3422** may be wound in opposite directions. Or, the first coil **3421** and the second coil **3422** are wound in the same direction, and the polarity disposement of the first magnet **3411** and the polarity disposement of the second magnet **3412** may be disposed in different directions. Meanwhile, the first coil **3421** and the second coil **3422** are electrically separated and may be integrally controlled by the control unit.

The third coil **3423** and the fourth coil **3424** may be electrically connected. However, the direction of the Lorentz force generated between the third coil **3423** and the third magnet **3413** and the direction of the Lorentz force generated between the fourth coil **3424** and the fourth magnet **3414** may be opposite. The third coil **3423** and the fourth coil **3424** may be disposed so that currents flow in directions opposite to each other. For example, the third coil **3423** and the fourth coil **3424** may be disposed by being wound in opposite directions. Or, the third coil **3423** and the fourth coil **3424** may be wound in the same direction, and the polarity disposement of the third magnet **3413** and the polarity disposement of the fourth magnet **3414** may be disposed in different directions. Meanwhile, the third coil 3423 and the fourth coil **3424** may be electrically separated and may be integrally controlled by the control unit.

In a first embodiment of the present invention, the first coil **3421** may be disposed at the opposite side of the fourth coil **3424.** The second coil **3422** may be disposed at the opposite side of the third coil **3423.** At this time, the virtual straight line connecting the first coil **3421** and the fourth coil **3424** may form an acute angle with the virtual straight line connecting the second coil **3422** and the third coil **3423.**

The camera device may comprise a camera module **3500.** The camera module **3500** may comprise a lens driving device. The camera module **3500** may comprise a voice coil motor (VCM). The camera module **3500** may comprise a lens driving motor. The camera module **3500** may comprise a lens driving actuator. The camera module **3500** may comprise a fixed focus (FF) module.

The first embodiment of the present invention has the advantage that SR ToF can be implemented only by applying some configurations of the second embodiment of the present invention illustrated in FIG. 35 to a fixed focus camera module.

The camera module **3500** may comprise a printed circuit board (PCB) **3510.** A light emitting module and a light receiving module may be disposed on the printed circuit board **3510.** The printed circuit board **3510** may be electrically connected to the light emitting module and the light receiving module.

The camera module **3500** may comprise a sensor **3520.** The sensor **3520** may be disposed on the printed circuit board **3510.** The sensor **3520** may detect light. The sensor **3520** may detect light and output it as an electrical signal. The sensor **3520** may detect light having a wavelength corresponding to the wavelength of light outputted from the light source. The sensor **3520** may detect infrared rays. Or, the sensor **3520** may detect visible light.

The sensor **3520** may comprise: a pixel array that receives the light passing through the lens **3540** and converts it into an electrical signal corresponding to the light; and a driving circuit for driving a plurality of pixels comprised in the pixel array and a readout circuit for reading an analog pixel signal of each pixel. The readout circuit may generate a digital pixel signal (or an image signal) through analog-to-digital conversion by comparing the analog pixel signal with a reference signal. Here, the digital pixel signal of each pixel comprised in the pixel array constitutes an image signal, and as the image signal is transmitted in units of frames, it may be defined as an image frame. That is, the image sensor may output a plurality of image frames.

The camera module **3500** may comprise an image synthesizing unit. The image synthesizing unit may comprise an image processor that receives an image signal from the sensor **3520** and processes the image signal (e.g., interpolation, frame synthesis, and the like). In particular, the image synthesizing unit may synthesize image signals (low resolution) of a plurality of frames into one image signal (high resolution) of one frame. That is, the image synthesizing unit may synthesize a plurality of image frames comprised in the image signal received from the sensor **3520,** and generate the synthesized result as a composite image. The composite image generated by the image synthesizing unit may have a higher resolution than the plurality of image frames being outputted from the sensor **3520.** That is, the image synthesizing unit may generate a high-resolution image through a super resolution (SR) technique. The plurality of image frames may comprise image frames generated by changing different optical paths by driving the liquid lens **3200.**

The camera module **3500** may comprise a base **3530.** The base **3530** may be disposed on the printed circuit board **3510.** The base **3530** may be directly coupled to an upper surface of the printed circuit board **3510.** The base **3530** may be integrally formed. Through this, the space between the sensor **3520** and the filter **3550** may be sealed by the base **3530.**

The camera module **3500** may comprise a lens **3540.** The lens **3540** may be coupled to the base **3530.** The lens **3540** may be screw-coupled to the base **3530.** The lens **3540** may be fixed to the base **3530.** At least a portion of the lens **3540** may be disposed inside the base **3530.** Light reflected from the subject may pass through the lens **3540.** The optical axis of the lens **3540** and the optical axis of the sensor **3520** may be aligned.

The camera module **3500** may comprise a filter **3550.** The filter **3550** may be disposed on the base **3530.** The filter **3550** may be disposed between the lens **3540** and the sensor **3520.** The filter **3550** may be disposed on an optical path between the subject and the sensor **3520.** The filter **3550** may filter light having a predetermined wavelength range. The filter **3550** may pass light of a specific wavelength. That is, the filter **3550** may block light other than a specific wavelength by reflecting or absorbing it. The filter **3550** may pass infrared rays and block light of wavelengths other than infrared rays. Or, the filter **3550** may pass visible light and block light of a wavelength other than visible light.

Hereinafter, a method for obtaining a high-resolution image through a super-resolution (SR) technique in a camera device according to a second embodiment of the present invention will be described with reference to the drawings.

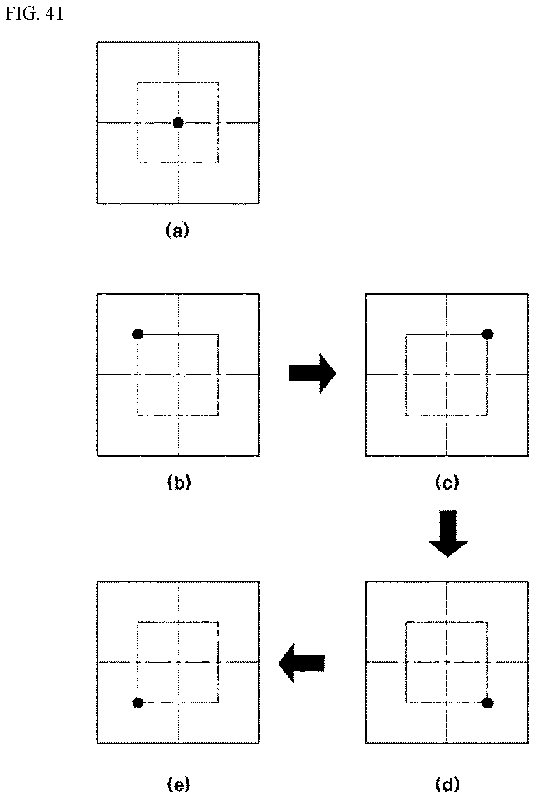

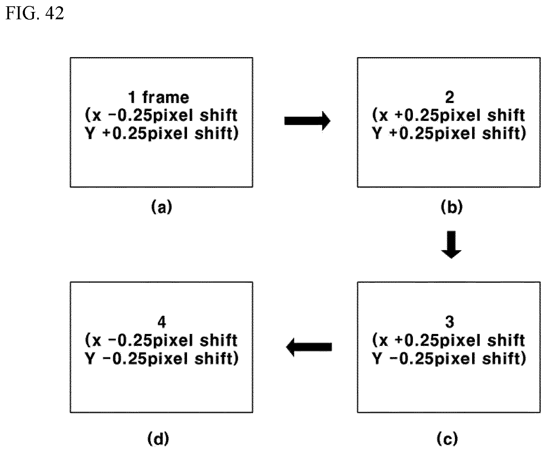

FIG. 41 is a conceptual diagram conceptually sequentially illustrating a plurality of images acquired for a super resolution (SR) technique in a camera device according to a second embodiment of the present invention; and FIG. 42 is a diagram sequentially illustrating images of first to fourth frames acquired for the SR technique in a camera device according to a second embodiment of the present invention.

The super resolution (SR) technique in a first embodiment of the present invention is a principle of increasing resolution by acquiring an additional image through driving of the liquid lens **3200.** In FIG. 41 (a), the dotted point may be an image location being photographed when the liquid lens **3200** is not driven. In a first embodiment of the present invention, the resolution can be increased by 4 times by acquiring 1 frame in each direction and by additionally acquiring a total of 4 frames through 4-direction diagonal tilting of the lens forming member **3240** with respect to the membrane **3210** of the liquid lens **3200.** At this time, the four-direction diagonal tilting of the lens forming member **3240** may be in the order of upper left, upper right, lower right, and lower left. In a first embodiment of the present invention, the driving unit 3400 can be designed so that the lens forming member **3240** can be tilted diagonally for the above-described control. In more detail, as in FIG. 41 (b), the image of the first frame shifted by -0.25 pixels in the x-direction and +0.25 pixels in the y-direction can be obtained in the sensor **3520** by controlling the upper left part of the lens forming member **3240** so as to be tilted upward (refer to FIG. 42 (a)). At this time, the lower right portion of the lens forming member **3240** may be tilted downward. After that, as shown in FIG. 41 (c), the image of the second frame shifted by +0.25 pixels in the x-direction and +0.25 pixels in the y-direction by the sensor **3520** can be obtained by controlling the upper right part of the lens forming member **3240** so as to be tilted upward (refer to FIG. 42 (b)).

At this time, the lower left portion of the lens forming member **3240** may be tilted downward. Thereafter, as shown in FIG. 41 (d), by controlling the lower right portion of the lens forming member **3240** to be tilted upward, an image of the third frame being shifted +0.25 pixels in the x-direction and -0.25 pixels shifted in the y-direction on the sensor **3520** can be obtained (refer to FIG. 42 (c)). At this time, the upper left portion of the lens forming member **3240** may be tilted downward. Thereafter, as shown in FIG. 41 (e), by controlling the lower left portion of the lens forming member **3240** to be tilted upward, an image of the fourth frame being shifted -0.25 pixels in the x-direction and -0.25 pixels shifted in the y direction on the sensor **3520** can be obtained (refer to FIG. 42 (d)). At this time, the upper right portion of the lens forming member **3240** may be tilted downward.

The embodiments of the present invention have been described above with reference to the accompanying drawings, but a person skilled in the art to which the present invention belongs may understand that the present invention can be implemented in other specific forms. Therefore, it should be understood that the embodiments described above are illustrative and non-limiting in all respects.

## Claims

1. A camera device comprising:
a holder (3100) comprising an upper plate (3110) and a side plate (3120) extending from the upper plate (3110);
a liquid lens (3200) disposed on the upper plate (3110) of the holder (3100);
a magnet (3410) coupled to the liquid lens (3200);
a substrate (3300) disposed on the side plate (3120) of the holder (3100); and
a coil (3420) coupled to the substrate (3300) and facing the magnet (3410),
wherein the liquid lens (3200) comprises
a transparent and elastically extendable membrane (3210);
a body (3230) forming a cavity with the membrane (3210) therebetween;
a liquid (3250) disposed in the cavity; and
a lens forming member (3240) contacted with the membrane (3210) and configured to adjust a curvature of the membrane (3210),
wherein the side plate (3120) of the holder (3100) comprises a first side plate and a second side plate disposed opposite to the first side plate,
wherein the substrate (3300) comprises a first substrate (3310) disposed on the first side plate of the holder (3100) and a second substrate (3320) disposed on the second side plate of the holder (3100), and
wherein the coil (3420) comprises a first coil (3421) and a second coil (3422) disposed on the first substrate (3310), and a third coil (3423) and a fourth coil (3424) disposed on the second substrate (3320), wherein the magnet (3410) comprises a first magnet (3411) disposed on the lens forming member (3240) and facing the first coil (3421), a second magnet (3412) disposed on the lens forming member (3240) and facing the second coil (3422), a third magnet (3413) disposed on the lens forming member (3240) and facing the third coil (3423), and a fourth magnet (3414) disposed on the lens forming member (3240) and facing the fourth coil (3424),
wherein the first and second magnets (3411, 3412) are disposed at one side of the lens forming member (3240),
wherein the third and fourth magnets (3413, 3414) are disposed at the other side of the lens forming member (3240),
wherein an upper portion of the first magnet (3411) has an N-pole polarity, and a lower portion of the first magnet (3411) has an S-pole polarity, and
wherein an upper portion of the second magnet (3412) has an S-pole polarity, and a lower portion of the second magnet (3412) has an N-pole polarity.

2. The camera device of claim 1, wherein an outer side surface of the first magnet (3411) and an outer side surface of the second magnet (3412) face a same direction, and
wherein an outer side surface of the third magnet (3413) and an outer side surface of the fourth magnet (3414) face a same direction.

3. The camera device of claim 1 or 2, wherein an outer side surface of the first magnet (3411) and an outer side surface of the second magnet (3412) are disposed on a same plane, and
wherein an outer side surface of the third magnet (3413) and an outer side surface of the fourth magnet (3414) are disposed on a same plane.

4. The camera device of any one of claims 1 to 3, wherein the holder (3100) comprises a first hole (3131) formed on the first side plate and a second hole (3132) formed on the second side plate,
Wherein the first coil (3421) and the second coil (3422) are disposed on the first hole (3131) of the holder (3100), and
wherein the third coil (3423) and the fourth coil (3424) are disposed on the second hole (3132) of the holder (3100).

5. The camera device of any one of claims 1 to 4, wherein an upper portion of the third magnet (3413) has an N-pole polarity, and a lower part of the third magnet (3413) has an S-pole polarity, and
wherein an upper portion of the fourth magnet (3414) has an S-pole polarity, and a lower portion of the fourth magnet (3414) has an N-pole polarity.

6. The camera device of any one of claims 1 to 5, wherein the lens forming member (3240) comprises a yoke (3243), and
wherein the magnet (3410) is disposed on the yoke (3243) and disposed between the yoke (3243) and the coil (3420).

7. The camera device of any one of claims 1 to 6, wherein the lens forming member (3240) comprises a window (3241) configured to press the membrane (3210) and a frame (3242) coupled to the window (3241), and
wherein the magnet (3410) is disposed on the frame (3242).

8. The camera device of claim 7, wherein the frame (3242) comprises a body portion comprising a hole and coupled to the window (3241) and a leg portion (3242c) outwardly extending from the body portion, and
wherein the leg portion (3242c) comprises a first leg portion and a second leg portion extending from one side surface of the body portion in a first direction and spaced apart from each other, and a third leg portion and a fourth leg portion extending from an another side surface of the body portion in a second direction opposite to the first direction and spaced apart from each other.

9. The camera device of claim 8, wherein each of the first to fourth leg portions comprises a hole formed at a position corresponding to a portion of the magnet (3410).

10. The camera device of any one of claims 1 to 9, wherein the holder (3100) comprises a protrusion (3140) protruding from an outer surface of the side plate (3120) of the holder (3100), and
wherein the substrate (3300) comprises a hole (3330) into which the protrusion (3140) of the holder (3100) is inserted.

11. The camera device of any one of claims 1 to 10, comprising:
a printed circuit board (3510);
a sensor (3520) disposed on the printed circuit board (3510);
a base (3530) disposed on the printed circuit board (3510);
a lens (3540) coupled to the base (3530); and
a filter (3550) disposed on the base (3540) and disposed between the lens (3540) and the sensor (3520),
wherein the liquid lens (3200) is disposed at a position corresponding to the lens (3540).

12. The camera device of claim 11, wherein the base (3530) is directly coupled to an upper surface of the printed circuit board (3510), and
wherein the base (3530) is integrally formed so that a space between the sensor (3520) and the filter (3550) is sealed by the base (3530).

13. The camera device of any one of claims 1 to 12, wherein the curvature of the membrane (3210) is configured to be controlled by an interaction between the coil (3420) and the magnet (3410) so that the liquid lens (3200)
- acquires an image moved by a distance of 0.25 times a pixel size in a first direction, acquires an image moved by a distance of 0.25 times the pixel size in a second direction perpendicular to the first direction,
- acquires an image moved by a distance of 0.25 times the pixel size in a third direction opposite to the first direction, and
- acquires an image moved by a distance of 0.25 times the pixel size in a fourth direction opposite to the second direction.

14. An optical device comprising:
a light emitting module; and
the camera device of any one of claims 1 to 13,
wherein the camera device receives a light irradiated from the light emitting module.

## Patentansprüche

1. Kameravorrichtung, umfassend:
einen Halter (3100), umfassend eine obere Platte (3110) und eine Seitenplatte (3120), die sich von der oberen Platte (3110) erstreckt;
eine Flüssiglinse (3200), die auf der oberen Platte (3110) des Halters (3100) angeordnet ist;
einen Magneten (3410), der mit der Flüssiglinse (3200) gekoppelt ist;
ein Substrat (3300), das auf der Seitenplatte (3120) des Halters (3100) angeordnet ist; und
eine Spule (3420), die mit dem Substrat (3300) gekoppelt ist und dem Magneten (3410) zugewandt ist,
wobei die Flüssiglinse (3200) umfasst:
eine transparente und elastisch dehnbare Membran (3210);
einen Körper (3230), der einen Hohlraum mit der Membran (3210) dazwischen bildet;
eine in dem Hohlraum angeordnete Flüssigkeit (3250); und
ein Linsenbildungselement (3240), das mit der Membran (3210) in Kontakt steht und konfiguriert ist, um eine Krümmung der Membran (3210) anzupassen,
wobei die Seitenplatte (3120) des Halters (3100) eine erste Seitenplatte und eine der ersten Seitenplatte gegenüberliegend angeordnete zweite Seitenplatte umfasst,
wobei das Substrat (3300) ein erstes Substrat (3310), das an der ersten Seitenplatte des Halters (3100) angeordnet ist, und ein zweites Substrat (3320), das an der zweiten Seitenplatte des Halters (3100) angeordnet ist, umfasst, und wobei die Spule (3420) eine erste Spule (3421) und eine zweite Spule (3422), die auf dem ersten Substrat (3310) angeordnet sind, und eine dritte Spule (3423) und eine vierte Spule (3424), die auf dem zweiten Substrat (3320) angeordnet sind, umfasst, wobei der Magnet (3410) einen ersten Magneten (3411), der an dem Linsenbildungselement (3240) angeordnet ist und der ersten Spule (3421) zugewandt ist, einen zweiten Magneten (3412), der an dem Linsenbildungselement (3240) angeordnet ist und der zweiten Spule (3422) zugewandt ist, einen dritten Magneten (3413), der an dem Linsenbildungselement (3240) angeordnet ist und der dritten Spule (3423) zugewandt ist, und einen vierten Magneten (3414), der an dem Linsenbildungselement (3240) angeordnet ist und der vierten Spule (3424) zugewandt ist, umfasst,
wobei der erste und der zweite Magnet (3411, 3412) an einer Seite des Linsenbildungselements (3240) angeordnet sind,
wobei der dritte und vierte Magnet (3413, 3414) an der anderen Seite des Linsenbildungselements (3240) angeordnet sind,
wobei ein oberer Abschnitt des ersten Magneten (3411) eine N-Pol-Polarität aufweist, und ein unterer Abschnitt des ersten Magneten (3411) eine S-Pol-Polarität aufweist, und
wobei ein oberer Abschnitt des zweiten Magneten (3412) eine S-Pol-Polarität aufweist, und ein unterer Abschnitt des zweiten Magneten (3412) eine N-Pol-Polarität aufweist.

2. Kameravorrichtung nach Anspruch 1, wobei eine äußere Seitenoberfläche des ersten Magneten (3411) und eine äußere Seitenoberfläche des zweiten Magneten (3412) in eine gleiche Richtung weisen, und
wobei eine äußere Seitenoberfläche des dritten Magneten (3413) und eine äußere Seitenoberfläche des vierten Magneten (3414) in eine gleiche Richtung weisen.

3. Kameravorrichtung nach Anspruch 1 oder 2, wobei eine äußere Seitenoberfläche des ersten Magneten (3411) und eine äußere Seitenoberfläche des zweiten Magneten (3412) auf einer gleichen Ebene angeordnet sind, und
wobei eine äußere Seitenoberfläche des dritten Magneten (3413) und eine äußere Seitenoberfläche des vierten Magneten (3414) auf einer gleichen Ebene angeordnet sind.

4. Kameravorrichtung nach einem der Ansprüche 1 bis 3, wobei der Halter (3100) ein an der ersten Seitenplatte ausgebildetes erstes Loch (3131) und ein an der zweiten Seitenplatte ausgebildetes zweites Loch (3132) umfasst,
wobei die erste Spule (3421) und die zweite Spule (3422) an dem ersten Loch (3131) des Halters (3100) angeordnet sind, und
wobei die dritte Spule (3423) und die vierte Spule (3424) an dem zweiten Loch (3132) des Halters (3100) angeordnet sind.

5. Kameravorrichtung nach einem der Ansprüche 1 bis 4, wobei ein oberer Abschnitt des dritten Magneten (3413) eine N-Pol-Polarität aufweist und ein unterer Teil des dritten Magneten (3413) eine S-Pol-Polarität aufweist, und
wobei ein oberer Abschnitt des vierten Magneten (3414) eine S-Pol-Polarität aufweist, und ein unterer Abschnitt des vierten Magneten (3414) eine N-Pol-Polarität aufweist.

6. Kameravorrichtung nach einem der Ansprüche 1 bis 5, wobei das Linsenbildungselement (3240) ein Joch (3243) umfasst, und
wobei der Magnet (3410) auf dem Joch (3243) angeordnet ist und zwischen dem Joch (3243) und der Spule (3420) angeordnet ist.

7. Kameravorrichtung nach einem der Ansprüche 1 bis 6, wobei das Linsenbildungselement (3240) ein Fenster (3241), das konfiguriert ist, um die Membran (3210) zu drücken, und einen Rahmen (3242), der an das Fenster (3241) gekoppelt ist, umfasst, und
wobei der Magnet (3410) auf dem Rahmen (3242) angeordnet ist.

8. Kameravorrichtung nach Anspruch 7, wobei der Rahmen (3242) einen Körperabschnitt, der ein Loch umfasst und an das Fenster (3241) gekoppelt ist, und einen Schenkelabschnitt (3242c), der sich von dem Körperabschnitt nach außen erstreckt, umfasst, und
wobei der Schenkelabschnitt (3242c) einen ersten Schenkelabschnitt und einen zweiten Schenkelabschnitt, die sich von einer Seitenoberfläche des Körperabschnitts in eine erste Richtung erstrecken und voneinander beabstandet sind, und einen dritten Schenkelabschnitt und einen vierten Schenkelabschnitt, die sich von einer anderen Seitenoberfläche des Körperabschnitts in eine zweite Richtung entgegengesetzt zur ersten Richtung erstrecken und voneinander beabstandet sind, umfasst.

9. Kameravorrichtung nach Anspruch 8, wobei jeder der ersten bis vierten Schenkelabschnitte ein Loch umfasst, das an einer Position ausgebildet ist, die einem Abschnitt des Magneten (3410) entspricht.

10. Kameravorrichtung nach einem der Ansprüche 1 bis 9, wobei der Halter (3100) einen Vorsprung (3140) umfasst, der von einer Außenoberfläche der Seitenplatte (3120) des Halters (3100) vorsteht, und
wobei das Substrat (3300) ein Loch (3330) umfasst, in das der Vorsprung (3140) des Halters (3100) eingesetzt ist.

11. Kameravorrichtung nach einem der Ansprüche 1 bis 10, umfassend:
eine Leiterplatte (3510);
einen Sensor (3520), der auf der Leiterplatte (3510) angeordnet ist;
eine Basis (3530), die auf der Leiterplatte (3510) angeordnet ist;
eine Linse (3540), die mit der Basis (3530) gekoppelt ist; und
einen Filter (3550), der auf der Basis (3540) angeordnet ist und zwischen der Linse (3540) und dem Sensor (3520) angeordnet ist,
wobei die Flüssiglinse (3200) an einer der Linse (3540) entsprechenden Position angeordnet ist.

12. Kameravorrichtung nach Anspruch 11, wobei die Basis (3530) direkt mit einer oberen Oberfläche der Leiterplatte (3510) gekoppelt ist, und
wobei die Basis (3530) einstückig ausgebildet ist, sodass ein Raum zwischen dem Sensor (3520) und dem Filter (3550) durch die Basis (3530) abgedichtet ist.

13. Kameravorrichtung nach einem der Ansprüche 1 bis 12, wobei die Krümmung der Membran (3210) konfiguriert ist, um durch eine Wechselwirkung zwischen der Spule (3420) und dem Magneten (3410) gesteuert zu werden, sodass die Flüssiglinse (3200)
- ein Bild erfasst, das um eine Distanz des 0,25-Fachen einer Pixelgröße in einer ersten Richtung verschoben ist, ein Bild erfasst, das um eine Distanz des 0,25-Fachen der Pixelgröße in einer zweiten Richtung senkrecht zur ersten Richtung verschoben ist,
- ein Bild erfasst, das um eine Distanz des 0,25-Fachen der Pixelgröße in einer dritten Richtung entgegengesetzt zur ersten Richtung verschoben ist, und
- ein Bild erfasst, das um eine Distanz des 0,25-Fachen der Pixelgröße in einer vierten Richtung entgegengesetzt zur zweiten Richtung verschoben ist.

14. Optische Vorrichtung, umfassend:
ein lichtemittierendes Modul; und
die Kameravorrichtung nach einem der Ansprüche 1 bis 13,
wobei die Kameravorrichtung ein von dem lichtemittierenden Modul abgestrahltes Licht empfängt.

## Revendications

1. Un dispositif de caméra comprenant :
un support (3100) comprenant une plaque supérieure (3110) et une plaque latérale (3120) s'étendant depuis la plaque supérieure (3110) ;
une lentille liquide (3200) disposée sur la plaque supérieure (3110) du support (3100) ;
un aimant (3410) couplé à la lentille liquide (3200) ;
un substrat (3300) disposé sur la plaque latérale (3120) du support (3100) ;
et une bobine (3420) reliée au substrat (3300) et faisant face à l'aimant (3410),
dans lequel la lentille liquide (3200) comprend
une membrane (3210) transparente et extensible élastiquement ;
un corps (3230) formant une cavité avec la membrane (3210) interposée entre eux ;
un liquide (3250) disposé dans la cavité ; et
un élément de formation de lentille (3240) en contact avec la membrane (3210) et configuré pour ajuster une courbure de la membrane (3210),
dans lequel la plaque latérale (3120) du support (3100) comprend une première plaque latérale et une deuxième plaque latérale disposée à l'opposé de la première plaque latérale,
dans lequel le substrat (3300) comprend un premier substrat (3310) disposé sur la première plaque latérale du support (3100) et un deuxième substrat (3320) disposé sur la deuxième plaque latérale du support (3100), et
dans lequel la bobine (3420) comprend une première bobine (3421) et une deuxième bobine (3422) disposées sur le premier substrat (3310), ainsi qu'une troisième bobine (3423) et une quatrième bobine (3424) disposées sur le deuxième substrat (3320), dans lequel l'aimant (3410) comprend un premier aimant (3411) disposé sur l'élément de formation de lentille (3240) et faisant face à la première bobine (3421), un deuxième aimant (3412) disposé sur l'élément de formation de lentille (3240) et faisant face à la deuxième bobine (3422), un troisième aimant (3413) disposé sur l'élément de formation de lentille (3240) et faisant face à la troisième bobine (3423), et un quatrième aimant (3414) disposé sur l'élément de formation de lentille (3240) et faisant face à la quatrième bobine (3424),
dans lequel les premier et deuxième aimants (3411, 3412) sont disposés d'un côté de l'élément de formation de lentille (3240),
dans lequel les troisième et quatrième aimants (3413, 3414) sont disposés de l'autre côté de l'élément de formation de lentille (3240),
dans lequel une partie supérieure du premier aimant (3411) présente une polarité de pôle N, et une partie inférieure du premier aimant (3411) présente une polarité de pôle S, et
dans lequel une partie supérieure du deuxième aimant (3412) présente une polarité de pôle S, et une partie inférieure du deuxième aimant (3412) présente une polarité de pôle N.

2. Dispositif de caméra selon la revendication 1, dans lequel une surface latérale extérieure du premier aimant (3411) et une surface latérale extérieure du deuxième aimant (3412) sont orientées dans une même direction, et
dans lequel une surface latérale extérieure du troisième aimant (3413) et une surface latérale extérieure du quatrième aimant (3414) sont orientées dans une même direction.

3. Dispositif de caméra selon la revendication 1 ou 2, dans lequel une surface latérale extérieure du premier aimant (3411) et une surface latérale extérieure du deuxième aimant (3412) sont situées dans un même plan, et
dans lequel une surface latérale extérieure du troisième aimant (3413) et une surface latérale extérieure du quatrième aimant (3414) sont situées dans un même plan.

4. Dispositif de caméra selon l'une quelconque des revendications 1 à 3, dans lequel le support (3100) comprend un premier trou (3131) formé sur la première plaque latérale et un deuxième trou (3132) formé sur la deuxième plaque latérale,
Dans lequel la première bobine (3421) et la deuxième bobine (3422) sont disposées sur le premier trou (3131) du support (3100), et
dans lequel la troisième bobine (3423) et la quatrième bobine (3424) sont disposées sur le deuxième trou (3132) du support (3100).

5. Le dispositif de caméra selon l'une quelconque des revendications 1 à 4, dans lequel une partie supérieure du troisième aimant (3413) présente une polarité de pôle N, et une partie inférieure du troisième aimant (3413) présente une polarité de pôle S, et
dans lequel une partie supérieure du quatrième aimant (3414) présente une polarité de pôle S, et une partie inférieure du quatrième aimant (3414) présente une polarité de pôle N.

6. Le dispositif de caméra selon l'une quelconque des revendications 1 à 5, dans lequel l'élément de formation de lentille (3240) comprend une culasse (3243), et
dans lequel l'aimant (3410) est disposé sur la culasse (3243) et entre la culasse (3243) et la bobine (3420).

7. Le dispositif de caméra selon l'une quelconque des revendications 1 à 6, dans lequel l'élément de formation de lentille (3240) comprend une fenêtre (3241) conçue pour appuyer sur la membrane (3210) et un cadre (3242) relié à la fenêtre (3241), et
dans lequel l'aimant (3410) est disposé sur le cadre (3242).

8. Le dispositif de caméra selon la revendication 7, dans lequel le cadre (3242) comprend une partie de corps comportant un trou et reliée à la fenêtre (3241), ainsi qu'une partie de patte (3242c) s'étendant vers l'extérieur depuis la partie de corps, et
dans lequel la partie de patte (3242c) comprend une première partie de patte et une deuxième partie de patte qui s'étendent depuis une surface latérale de la partie de corps dans une première direction et sont espacées l'une de l'autre, ainsi qu'une troisième partie de patte et une quatrième partie de patte qui s'étendent depuis une autre surface latérale de la partie de corps dans une deuxième direction opposée à la première direction et sont espacées l'une de l'autre.

9. Le dispositif de caméra selon la revendication 8, dans lequel chacune des parties de patte, de la première à la quatrième, comprend un trou formé à une position correspondant à une partie de l'aimant (3410).

10. Le dispositif de caméra selon l'une quelconque des revendications 1 à 9, dans lequel le support (3100) comprend une saillie (3140) s'étendant depuis une surface extérieure de la plaque latérale (3120) du support (3100), et
dans lequel le substrat (3300) comprend un trou (3330) dans lequel est insérée la saillie (3140) du support (3100).

11. Le dispositif de caméra selon l'une quelconque des revendications 1 à 10, comprenant :
une carte de circuit imprimé (3510) ;
un capteur (3520) disposé sur la carte de circuit imprimé (3510) ;
une base (3530) disposée sur la carte de circuit imprimé (3510) ;
une lentille (3540) couplée à la base (3530) ; et
un filtre (3550) disposé sur la base (3540) et entre la lentille (3540) et le capteur (3520),
dans lequel la lentille liquide (3200) est disposée dans une position correspondant à la lentille (3540).

12. Le dispositif de caméra selon la revendication 11, dans lequel la base (3530) est directement couplée à une surface supérieure de la carte de circuit imprimé (3510), et
dans lequel la base (3530) est formée d'un seul tenant de sorte que l'espace entre le capteur (3520) et le filtre (3550) est scellé par la base (3530).

13. Le dispositif de caméra selon l'une quelconque des revendications 1 à 12, dans lequel la courbure de la membrane (3210) est configurée pour être contrôlée par une interaction entre la bobine (3420) et l'aimant (3410), de sorte que la lentille liquide (3200)
- acquiert une image déplacée d'une distance égale à 0,25 fois la taille d'un pixel dans une première direction, acquiert une image déplacée d'une distance égale à 0,25 fois la taille d'un pixel dans une deuxième direction perpendiculaire à la première direction,
- acquiert une image déplacée d'une distance égale à 0,25 fois la taille d'un pixel dans une troisième direction opposée à la première direction, et
- acquiert une image déplacée d'une distance égale à 0,25 fois la taille d'un pixel dans une quatrième direction opposée à la deuxième direction.

14. Un dispositif optique comprenant :
un module émetteur de lumière ; et
le dispositif de caméra selon l'une quelconque des revendications 1 à 13,
dans lequel le dispositif de caméra reçoit une lumière émise par le module émetteur de lumière.
